# EUROPEAN PATENT APPLICATION

(11) **EP 4 692 221 A1**
(43) Date of publication of application: **11.02.2026**
(21) Application number: 24779177.5
(22) Date of filing: 05.03.2024
(51) Int. Cl.: C08L 27/06, B29B 17/00, B29B 17/04, B29C 48/03, C08K 5/09, C08K 5/098, C08K 5/54, C08L 27/18, E06B 1/26, E06B 1/32, E06B 3/20, G06Q 10/30, G06Q 50/08

(54) **COMPOSITION FOR SASH, SASH, AND METHOD FOR PRODUCING SASH**

(30) Priority: 30.03.2023 JP 2023056540; 21.04.2023 JP 2023069987; 21.04.2023 JP 2023069988; 21.04.2023 JP 2023069992; 21.04.2023 JP 2023070265
(71) Applicant: LIXIL Corporation, Tokyo 141-0033 (JP)
(72) Inventor: UEKI, Nozomu, Tokyo 141-0033 (JP); YAO, Takashi, Tokyo 141-0033 (JP); KADOKI, Takeshi, Tokyo 141-0033 (JP); KUMANO, Takashi, Tokyo 141-0033 (JP); HIWATARI, Yuichi, Tokyo 141-0033 (JP)
(74) Representative: Grünecker Patent- und Rechtsanwälte PartG mbB
(86) International application number: PCT/JP2024/008326
(87) International publication number: WO 2024/203039

(57) **Abstract**

Provided is a composition for a sash, which contains a recycled vinyl chloride-based resin and an additive. The additive is one or more types selected from the group consisting of maleic anhydride, polytetrafluoroethylene and a silane coupling agent.

## Description

### TECHNICAL FIELD

The present disclosure relates to a composition for a sash, a sash, and a method for producing a sash. The present disclosure also relates to a management system, a management device, a management method, and a terminal device that manage collection of a waste material generated in a renovation. The present disclosure further relates to a resin molded product, a method for producing a resin molded product, a resin extrusion-molded product, and a method for producing a resin extrusion-molded product.

### BACKGROUND ART

### (Background Art of First Aspect of Present Disclosure)

In the related art, use of a recycled vinyl chloride-based resin obtained by recycling a spent vinyl chloride-based resin has been studied.

Patent Document 1 describes a high-strength recycled plastic containing 100 parts by weight of polyvinyl chloride waste plastic, 8 parts by weight to 15 parts by weight of urethane elastomer, 5 parts by weight to 18 parts by weight of nano-silica, 5 parts by weight to 13 parts by weight of plastic compatibilizer, 1 part by weight to 3 parts by weight of antioxidant, and 3 parts by weight to 8 parts by weight of toughening agent. Here, the plastic compatibilizer is a composition obtained by melting and mixing a polyionic liquid and dioctyl phthalate at a mass ratio of 1:2 to 3. The polyionic liquid is obtained by copolymerizing benzyl trimethyl ammonium chloride and ethylene glycol dimethacrylate.

In addition, a sash is produced by extrusion-molding a recycled vinyl chloride-based resin.

### (Background Art of Second Aspect of Present Disclosure)

In the related art, in various opening devices such as a double sliding window, a projected window, and a FIX window, there has been used a device in which a resin frame is attached to an indoor side of a metal frame made of an aluminum alloy or the like as a decorative material to improve designability.

In the related art, the resin frame is often fixed to the metal frame by a screw or the like, but a fastening work is complicated, and a head portion of the screw is sometimes exposed to the indoor side.

On the other hand, in an opening device described in Patent Document 2, a cut portion is formed in a metal frame, a notch portion is formed in a resin frame at a position corresponding to the cut, and the resin frame is fixed to the metal frame by fitting the cut portion into the notch portion and crimping.

### (Background Art of Third Aspect and Fourth Aspect of Present Disclosure)

In the related art, use of a recycled vinyl chloride-based resin obtained by recycling a spent vinyl chloride-based resin has been studied.

Patent Document 3 describes a method for producing a resin sash, the method including: collecting a spent resin sash containing polyvinyl chloride as a main component; pulverizing the spent resin sash to prepare recycled powder; executing characteristic evaluation of the recycled powder; determining an additive to be added to the recycled powder based on a result of the characteristic evaluation; mixing the recycled powder and the additive to prepare a kneaded product; and extrusion-molding the kneaded product.

### (Background Art of Fifth Aspect of Present Disclosure)

As a countermeasure against an environmental problem such as global warming, a mechanism for reusing resources has been developed. For example, resources recycled from collected used paper, PET bottles, cans, bottles, and the like are reused in products (for example, see Patent Document 4).

### (Background Art of Sixth Aspect of Present Disclosure)

A lot of spent waste materials of buildings such as fences, decks, and fittings including windows and doors are discarded. Most of these waste materials are processed in a form of waste plastic or mixed waste and filled in a final landfill site. These waste materials include many resin members such as a resin deck and a resin frame of a fitting such as a window. In recent years, there has been a demand for a technique for recycling a waste material containing a resin in order to make an effort for environmental load reduction including 2050 Carbon Neutral Declaration. For example, Patent Document 5 discloses a technique for producing a hollow window frame using a resin material containing a recycled vinyl chloride-based resin collected from a waste material.

### Citation List

### Patent Document

Patent Document 1: Chinese Patent Application, Publication No. 112812470
Patent Document 2: Japanese Unexamined Patent Application, Publication No. 2005-83053
Patent Document 3: Japanese Unexamined Patent Application, Publication No. 2016-216558
Patent Document 4: Japanese Unexamined Patent Application, Publication No. 2010-184498
Patent Document 5: Japanese Unexamined Patent Application, Publication No. 2020-079531

### DISCLOSURE OF THE INVENTION

### Problems to be Solved by the Invention

### (Problem of First Aspect of Present Disclosure)

However, the high-strength recycled plastic described in Patent Document 1 cannot be applied to extrusion molding because the plastic compatibilizer is a viscous liquid.

On the other hand, the recycled vinyl chloride-based resin recycled from a sash contains impurities such as a high melting point resin, wood powder, and an inorganic substance. When such a recycled vinyl chloride-based resin is extrusion-molded to produce a sash, an interface between the recycled vinyl chloride-based resin and the impurities is easily peeled off in a case where stress is applied to the sash, and thus strength of the sash is reduced.

Therefore, the inventors have found a problem of providing a composition for a sash capable of improving strength of a sash even when a recycled vinyl chloride-based resin recycled from a sash is extrusion-molded.

### (Problem of Second Aspect of Present Disclosure)

Recently, SDGs has become a problem as a target common to the world, and recycling has been recommended as a specific effort. Even in a building material product such as a sash, breaking up the building material product into raw materials and recycling them as resources becomes a problem of a company. However, in the opening device described in Patent Document 2, when a product has reached the end of its service life, because the metal frame is fixed to the resin frame by crimping as described above, it is difficult to break up the crimped metal frame and resin frame.

In view of such a problem, an object of the present disclosure is to provide a sash in which a metal frame and a vinyl chloride-based resin frame are easily broken up during recycling.

### (Problem of Third Aspect of Present Disclosure)

However, since the recycled powder obtained by pulverizing the spent resin sash is mixed with the impurities such as a high melting point resin, wood powder, and an inorganic substance, in the resin sash obtained by extrusion molding, local irregularities are generated, resulting in defective appearance. Therefore, when a surface of the resin sash is smooth, the defective appearance is likely to be conspicuous.

Therefore, the inventors have found a problem of providing a composition for a sash in which defective appearance is less conspicuous even when a recycled vinyl chloride-based resin recycled from a sash is extrusion-molded.

### (Problem of Fourth Aspect of Present Disclosure)

However, when the method for producing a resin sash described in Patent Document 3 is used, the recycled powder also contains a lead-based stabilizer in a case where the spent resin sash contains the lead-based stabilizer. When thermal stability of the recycled powder is insufficient, the lead-based stabilizer may be added to prevent foaming.

Therefore, the inventors have found a problem of providing a method for producing a sash capable of preventing foaming and reducing a content of a lead-based stabilizer in a sash even when a recycled vinyl chloride-based resin recycled from a used sash is extrusion-molded.

### (Problem of Fifth Aspect of Present Disclosure)

When renovating building materials and facilities such as resin windows installed in a house, existing building materials and facilities are discarded. A mechanism for promoting recycling of resources contained in this waste is required.

The present disclosure has been made in view of such a problem, and an object of the present disclosure is to provide a technique for promoting reuse of resources.

### (Problem of Sixth Aspect of Present Disclosure)

Recycled resin materials are classified according to material after a component is disassembled and a pulverization process is performed. However, since the waste contains various resin materials and metal materials, different materials such as fine metal pieces are often mixed even after the classification. As in a technique disclosed in Patent Document 5, when a window frame is produced using a recycled resin mixed with different materials, a foreign substance is exposed on a surface of a molded product. A resin frame on which such a foreign substance is exposed does not satisfy the quality as a fitting such as a window frame.

The present disclosure has been made in view of the above circumstances, and an object of the present disclosure is to provide a resin molded product, a method for producing a resin molded product, a resin extrusion-molded product, and a method for producing a resin extrusion-molded product, which can achieve high quality while containing a recycled resin.

### Means for Solving the Problems

A first aspect of the present disclosure relates to a composition for a sash, including: a recycled vinyl chloride-based resin; and an additive, the additive being one or more selected from the group consisting of maleic anhydride, a polytetrafluoroethylene, and a silane coupling agent.

A sash in a second aspect of the present disclosure relates to a sash in which a vinyl chloride-based resin member is attached to a metal member, the sash including: a first engaging portion provided on the metal member; and a second engaging portion provided on the vinyl chloride-based resin member and engaged with the first engaging portion, the first engaging portion and the second engaging portion being fixed by being engaged with each other.

A third aspect of the present disclosure relates to a composition for a sash, including: a recycled vinyl chloride-based resin; and an unused crosslinked vinyl chloride-based resin.

A fourth aspect of the present disclosure relates to a method for producing a sash, including: a step of extrusion-molding a composition for a sash containing a recycled vinyl chloride-based resin and a stabilizer, the stabilizer being one or more selected from the group consisting of a calcium-zinc-based stabilizer, a barium-zinc-based stabilizer, and a tin-based stabilizer, a mass ratio of the stabilizer with respect to the recycled vinyl chloride-based resin in the composition for a sash being 1% or more and 5% or less.

### (Fifth Aspect of Present Disclosure)

In order to solve the above problem, a management system according to an aspect of the present disclosure includes: a management device that manages a waste material scheduled to be generated in a renovation work; and a terminal device that is to be used by a collector who collects the waste material, the management device including a waste material information acquisition unit that acquires information on the waste material scheduled to be generated in the renovation work, a provision information generation unit that generates provision information to be provided to the collector who collects the waste material based on the information acquired by the waste material information acquisition unit, and an information provision unit that provides the provision information generated by the provision information generation unit to the collector, the terminal device including a provision information acquisition unit that acquires the provision information from the management device, and a provision information presentation unit that presents the provision information acquired by the provision information acquisition unit.

Another aspect of the present disclosure relates to a management device. The management device includes: a waste material information acquisition unit that acquires information on the waste material scheduled to be generated in the renovation work; a provision information generation unit that generates provision information to be provided to the collector who collects the waste material based on the information acquired by the waste material information acquisition unit; and an information provision unit that provides the provision information generated by the provision information generation unit to the collector.

Still another aspect of the present disclosure relates to a management method. The method includes causing a computer to execute: a step of acquiring information on a waste material scheduled to be generated in a renovation work; a step of generating provision information to be provided to a collector who collects the waste material based on the acquired information; and a step of providing the generated provision information to the collector before the renovation work is performed.

Still another aspect of the present disclosure relates to a terminal device. The terminal device includes: a provision information acquisition unit that acquires, from a management device that manages a waste material scheduled to be generated in a renovation work, provision information generated based on information on the waste material by the management device; and a provision information presentation unit that presents the provision information acquired by the provision information acquisition unit.

Still another aspect of the present disclosure relates to a management method. The method includes causing a computer to execute a step of acquiring, from a management device that manages a waste material scheduled to be generated in a renovation work, provision information generated based on information on the waste material by the management device.

Any combination of the above components and a conversion of the expression of the present disclosure between methods, devices, systems, recording media, computer programs, and the like are also effective as aspects of the present disclosure.

### (Sixth Aspect of Present Disclosure)

A resin molded product according to an aspect of the present disclosure relates to a resin molded product containing a recycled material containing a resin, the resin molded product including: a base material portion; and a surface layer formed on a surface of the base material portion, the base material portion containing a matrix resin and a foreign substance contained in the matrix resin and formed of a component derived from the recycled material, the component being a resin different from the matrix resin or a metal, a particle diameter of the foreign substance being 355 µm or less, a thickness of the surface layer being 0.2 mm or more and 0.5 mm or less.

### BRIEF DESCRIPTION OF THE DRAWINGS

FIG. 1 is a schematic view illustrating an example of an extrusion molding machine used for producing a sash according to the present embodiment;
FIG. 2 is a horizontal sectional view of a main portion illustrating a coupling structure of a metal vertical frame and a resin vertical frame provided on a vertical frame of a double sliding window according to a first embodiment;
FIG. 3 is an enlarged view of the main portion in FIG. 2;
FIG. 4 is an enlarged view of a region surrounded by a broken line in FIG. 3;
FIG. 5 is a view in which a fitting portion in FIG. 4 is replaced with a second embodiment;
FIG. 6 is a view illustrating a configuration of a management system according to an embodiment;
FIG. 7 is a sequence diagram illustrating a procedure of a management method according to an embodiment;
FIG. 8 is a view illustrating a configuration of a management device according to an embodiment;
FIG. 9 is a view illustrating a configuration of a collector terminal according to an embodiment;
FIG. 10 is a schematic view illustrating one surface of a resin molded product according to an embodiment;
FIG. 11 is a cross-sectional view illustrating the resin molded product according to the embodiment;
FIG. 12 is a schematic view illustrating a foreign substance of the resin molded product according to the embodiment;
FIG. 13 is a flowchart of a method for producing a resin molded product according to the embodiment;
FIG. 14 is a cross-sectional view illustrating a resin extrusion-molded product according to an embodiment;
FIG. 15 is a cross-sectional view illustrating a resin extrusion-molded product according to an embodiment; and
FIG. 16 is a flowchart of a method for producing the resin extrusion-molded product according to the embodiment.

### PREFERRED MODE FOR CARRYING OUT THE INVENTION

### (First Aspect of Present Disclosure)

Hereinafter, an embodiment of the present disclosure will be described in detail with reference to the drawings.

### [Composition for Sash]

A composition for a sash of the present embodiment includes a recycled vinyl chloride-based resin and an additive, and the additive is one or more selected from the group consisting of maleic anhydride, a polytetrafluoroethylene, and a silane coupling agent. Therefore, even when the recycled vinyl chloride-based resin recycled from a sash is extrusion-molded, the strength of the sash is improved.

Here, the maleic anhydride can improve wettability of an interface between the recycled vinyl chloride-based resin and wood powder. As a result, even when the wood powder is mixed as an impurity in the recycled vinyl chloride-based resin, when the composition for a sash of the present embodiment is extrusion-molded to produce a sash, the interface between the recycled vinyl chloride-based resin and the wood powder is less likely to peel off in a case where stress is applied to the sash, and thus the strength of the sash is improved.

In addition, tetrafluoroethylene can improve viscosity of the composition for a sash of the present embodiment during extrusion molding. As a result, even when impurities such as a high-melting point resin, wood powder, and an inorganic substance are mixed in the recycled vinyl chloride-based resin, when the composition for a sash of the present embodiment is extrusion-molded to produce a sash, the impurities are easily uniformly distributed in the sash, and thus the strength of the sash is improved.

Further, the silane coupling agent can react with the inorganic substance and/or the recycled vinyl chloride-based resin during the extrusion molding of the composition for a sash of the present embodiment to improve adhesiveness of an interface between the recycled vinyl chloride-based resin and the inorganic substance. As a result, even when the inorganic substance is mixed as an impurity in the recycled vinyl chloride-based resin, when the composition for a sash of the present embodiment is extrusion-molded to produce a sash, the interface between the recycled vinyl chloride-based resin and the inorganic substance is less likely to peel off in a case where stress is applied to the sash, and thus the strength of the sash is improved.

The silane coupling agent has a hydrolyzable group, and may have a reactive functional group. Examples of the hydrolyzable group include an alkoxy group and a chloro group. Examples of the reactive functional group include an epoxy group, an acryloyloxy group, an amino group, a mercapto group, and an isocyanate group. Among them, the amino group is preferable in view of reactivity with the recycled vinyl chloride-based resin.

Examples of the silane coupling agent include 3-glycidyloxypropyltrimethoxysilane, 3-methacryloyloxypropyltrimethoxysilane, 3-aminopropyltrimethoxysilane, 3-mercaptopropyltrimethoxysilane, 3-ureidopropyltriethoxysilane, (3-isocyanatopropyl)trimethoxy silane, and octyltrimethoxysilane.

A content of the additive in the composition for a sash of the present embodiment is preferably 0.01 mass% or more and 10 mass% or less, and more preferably 0.1 mass% or more and 5 mass% or less. When the content of the additive in the composition for a sash of the present embodiment is 0.01 mass% or more and 10 mass% or less, the strength of the sash produced by extrusion molding the composition for a sash of the present embodiment is improved.

In the present description and claims, the vinyl chloride-based resin means a resin having a constituent unit derived from vinyl chloride.

The vinyl chloride-based resin may be either a homopolymer (polyvinyl chloride) of vinyl chloride or a copolymer thereof. The copolymer of vinyl chloride is a copolymer of vinyl chloride and a monomer copolymerizable with vinyl chloride.

Examples of the monomer copolymerizable with vinyl chloride include α-olefins, vinyl esters, vinyl ethers, (meth)acrylic acid esters, aromatic vinyls, and N-substituted maleimides, and two or more kinds thereof may be used in combination.

Examples of the α-olefins include ethylene, propylene, and butylene. Examples of the vinyl esters include vinyl acetate and vinyl propionate. Examples of the vinyl ethers include butyl vinyl ether and cetyl vinyl ether. Examples of the (meth)acrylic acid esters include methyl (meth)acrylate, ethyl (meth)acrylate, and butyl acrylate. Examples of the aromatic vinyls include styrene and α-methylstyrene. Examples of the N-substituted maleimides include N-phenylmaleimide and N-cyclohexylmaleimide.

Here, (meth)acrylate means acrylate or methacrylate, and (meth)acrylic acid means acrylic acid or methacrylic acid.

The copolymer of vinyl chloride may be a graft copolymer of vinyl chloride. The graft copolymer of vinyl chloride is obtained by graft-copolymerizing vinyl chloride with a polymer other than polyvinyl chloride. Examples of a polymer for graft-copolymerizing vinyl chloride include an ethylene-vinyl acetate copolymer, an ethylene-ethyl acrylate copolymer, an ethylene-butyl acrylate copolymer, an ethylene-methyl methacrylate copolymer, an ethylene-propylene copolymer, an acrylonitrile-butadiene copolymer, polyurethane, chlorinated polyethylene, and chlorinated polypropylene, and two or more kinds thereof may be used in combination.

The vinyl chloride-based resin may be used alone or in combination of two or more kinds thereof.

The composition for a sash of the present embodiment may further contain an additive other than the above-described additives (hereinafter, referred to as another additive).

The another additive is not particularly limited, and examples thereof include a colorant, a flame retardant, a stabilizer, a lubricant, a processing aid, an antioxidant, and an ultraviolet absorber, and two or more kinds thereof may be used in combination.

A form of the composition for a sash of the present embodiment is not particularly limited, and examples thereof include powder and pellets.

### [Sash and Method for Producing Sash]

A sash of the present embodiment is produced by extrusion-molding the composition for a sash of the present embodiment. For example, in a case where an inorganic substance is mixed as an impurity in the recycled vinyl chloride-based resin and the additive contains a silane coupling agent, the sash of the present embodiment contains a reaction product of the inorganic substance and/or the vinyl chloride-based resin with the silane coupling agent. A shape of the sash is not particularly limited, and a known shape can be used.

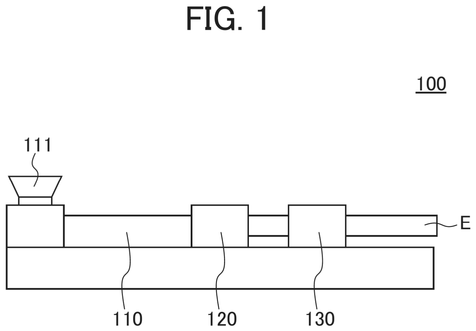

The method for producing a sash of the present embodiment includes a step of extrusion-molding the composition for a sash of the present embodiment. When the sash of the present embodiment is produced, for example, an extrusion molding machine 100 illustrated in FIG. 1 is used. The extrusion molding machine 100 includes an extruder 110 that extrudes the composition for a sash of the present embodiment, a die 120, and a cooler 130. The extruder 110 includes a hopper 111 into which the composition for a sash of the present embodiment is introduced. Here, the composition for a sash of the present embodiment introduced into the hopper 111 is heated to a predetermined temperature by the extruder 110 and extruded as a molten material. The molten material passes through the die 120 to have a predetermined shape, and then passes through the cooler 130 to obtain an extrusion-molded product E. The extrusion-molded product E is cut into any length to obtain the sash of the present embodiment.

### [Method for Producing Recycled Vinyl Chloride-based Resin]

The method for producing a recycled vinyl chloride-based resin is not particularly limited, and a known method can be used. For example, first, a foreign substance such as a metal is removed from the sash and then crushed. Next, the obtained powder is washed and then dried to obtain a recycled vinyl chloride-based resin.

### (Second Aspect of Present Disclosure)

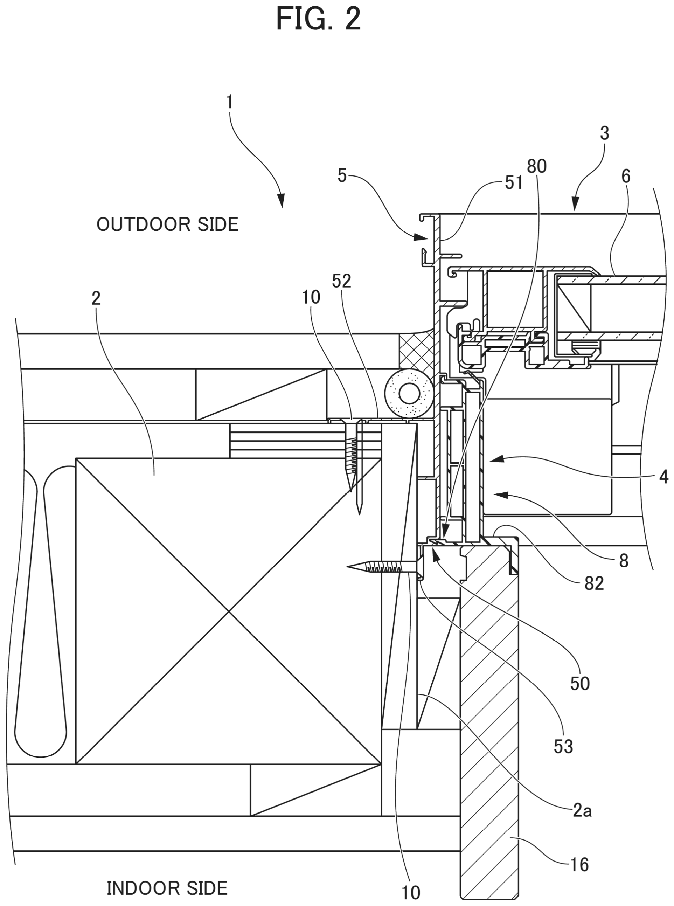

Hereinafter, a first embodiment of the present disclosure will be described in detail with reference to the drawings. A double sliding window 1 serving as a sash according to the embodiment illustrated in FIG. 2 includes a frame body 3 fixed to an opening 2a of a skeleton 2, which is formed in a rectangular frame shape including an upper frame, a lower frame, and left and right vertical frames 4. In the frame body 3, an outer panel 6 and an inner panel (not illustrated) are accommodated in an openable and closable manner. A vinyl chloride-based resin frame serving as a vinyl chloride-based resin member is coupled to an indoor side of the metal frame serving as the metal member of the frame body 3.

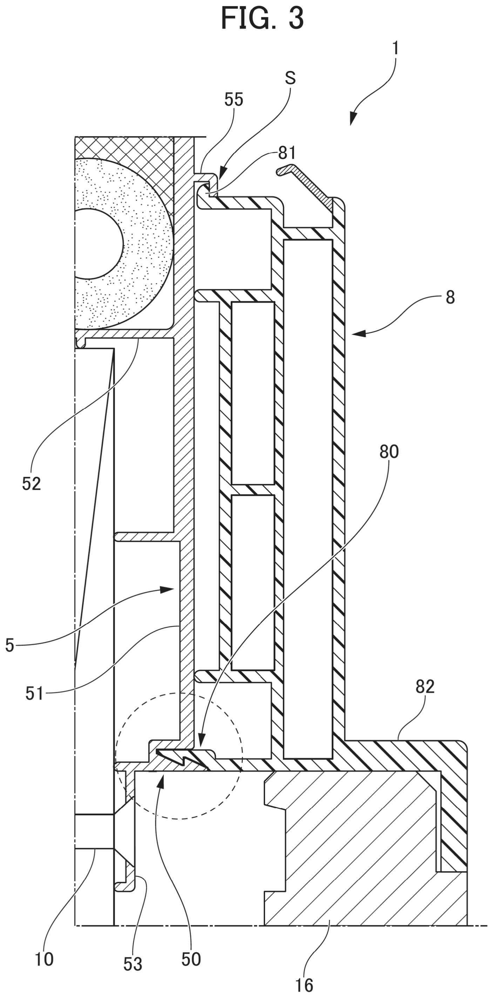

The vertical frame 4 is stored on an outdoor side of the opening 2a of the skeleton 2. The vertical frame 4 illustrated in FIGS. 2 and 3 includes a metal vertical frame 5 and a resin vertical frame 8 formed of a vinyl chloride-based resin frame fixed to the indoor side of the metal vertical frame 5, and is installed to face both left and right sides of the frame body 3.

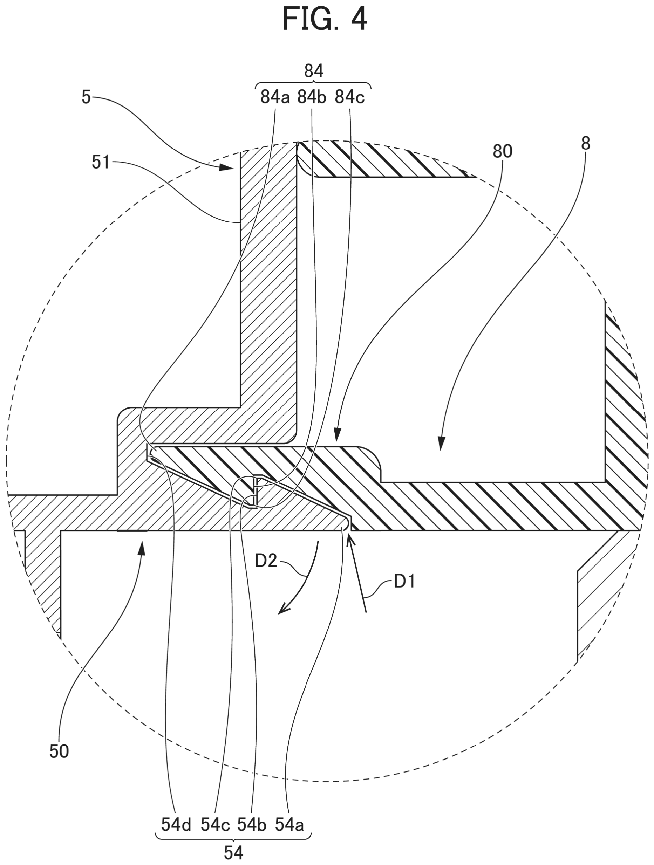

In the metal vertical frame 5, a plate-shaped main body portion 51 extends in an indoor and outdoor direction, and a branched portion 52 branched in the middle of the main body portion 51 extends to a skeleton 2 side and is fixed to the skeleton 2 by a fixing screw 10. A first engaging portion 50, which is bent in a substantially U-shape and has a claw-shaped attaching portion 54 (see FIG. 4), is formed at an end portion of the main body portion 51 of the metal vertical frame 5 on the indoor side. A tip piece 53 that branches off from the first engaging portion 50 and further extends toward the indoor side is fixed to the skeleton 2 by the fixing screw 10. A first locking portion 55 having a substantially L-shaped cross section for locking the resin vertical frame 8 is formed on the outdoor side of the main body portion 51. The first engaging portion 50 is provided to extend from an upper end to a lower end of the metal vertical frame 5. As illustrated in FIG. 4, the attaching portion 54 includes an insert receiving portion 54a, a locking portion 54b, a vertex 54c of a substantially right triangular claw portion, and an insert receiving portion 54d, and a portion from the insert receiving portion 54a to the vertex 54c has an inclined surface.

On the other hand, the resin vertical frame 8 has a plurality of hollow portions, and a second locking portion 81 having, for example, a substantially L shape and locked to the first locking portion 55 of the metal vertical frame 5 is formed at an end portion on the outdoor side of the resin vertical frame 8. In addition, an indoor piece portion 82 is formed at an end portion on the indoor side of the resin vertical frame 8, and one end thereof is bent in a substantially L shape and locked to a frame 16. The other end side of the indoor piece portion 82 is formed with an elastically deformable second engaging portion 80 which engages with the first engaging portion 50 of the metal vertical frame 5. As illustrated in FIG. 4, the second engaging portion 80 has a claw-shaped attaching portion 84. The second engaging portion 80 is provided to extend from an upper end to a lower end of the resin vertical frame 8. The attaching portion 84 includes an insertion portion 84a, a locked portion 84b, and a vertex 84c of a substantially right triangular claw portion, and a portion from the insertion portion 84a to the vertex 84c has an inclined surface. The insertion portion 84a is inserted into the insert receiving portion 54d, the locked portion 84b abuts on and is locked to the locking portion 54b, and a claw portion of the attaching portion 54 and the claw-shaped attaching portion 84 are engaged with each other, whereby the claw portion of the attaching portion 54 and the claw-shaped attaching portion 84 are fixed to each other.

Next, a method for assembling the metal vertical frame 5 and the resin vertical frame 8 of the left and right vertical frames 4 when assembling the frame body 3 of the double sliding window 1 having the above-described configuration will be described. First, in FIGS. 2 and 3, a tip of the second locking portion 81 provided at the end portion of the resin vertical frame 8 on the outdoor side is inserted into and engaged with the first locking portion 55 provided at the metal vertical frame 5, and the resin vertical frame 8 is caused to relatively rotate to a wall surface side of the opening 2a with an engaging portion indicated by S as a fulcrum.

The insertion portion 84a of the resin vertical frame 8 is brought into contact with the insert receiving portion 54a of the metal vertical frame 5, and while continuously rotating along an inclined surface of the claw portion of the attaching portion 54, the insertion portion 84a is elastically deformed with respect to the vertex 54c of the claw portion so as to climb over the vertex 54c of the claw portion to be in a fitted state. Accordingly, the resin vertical frame 8 is held so as not to come off in a horizontal direction with respect to the metal vertical frame 5. In the present embodiment, the engaging portion constitutes a fitting portion.

According to this structure, at the time of assembling the metal vertical frame 5 and the resin vertical frame 8, since a separate step such as fixing of a screw or crimping is unnecessary, and the assembly can be easily and reliably performed, there is an effect of facilitating construction.

Next, a method for separating the metal vertical frame 5 and the resin vertical frame 8 will be described. In FIG. 4, a flathead screwdriver or the like is inserted into a gap between the insert receiving portion 54a of the metal vertical frame 5 and the resin vertical frame 8 from a direction of an arrow D1, and the first engaging portion 50 of the metal vertical frame 5 is pushed open and deformed in a direction of an arrow D2. Accordingly, the engagement between the claw portion of the attaching portion 54 and the claw-shaped attaching portion 84 is released, and the fitting between the first engaging portion 50 and the second engaging portion 80 can be released, and thereafter, the two vertical frames can be separated without requiring any special work. One or a plurality of notches may be provided in one or both of the metal vertical frame 5 and the resin vertical frame 8. This is to facilitate the insertion of the flathead screwdriver or the like.

At the time of separating the metal vertical frame 5 serving as the metal member and the resin vertical frame 8 that are deeply fitted by crimping, a special tool or an extra manhour may be required, but since the fitting can be easily and reliably released with the above-described sash, there is an effect of facilitating classification of resources and promoting recycling.

Next, a second embodiment of the present disclosure will be described. In an engagement structure according to the second embodiment, a metal vertical frame 5A serving as the metal member includes an insertion portion 50A having a circular tip, and a resin vertical frame 8A serving as the vinyl chloride-based resin member includes a C-shaped locking portion 80A capable of fixing the insertion portion 50A. The insertion portion 50A and the locking portion 80A are provided to extend from an upper end to a lower end of the metal vertical frame 5A or the resin vertical frame 8A. Since a double sliding window in the second embodiment is the same as the double sliding window 1 in the first embodiment except for the engagement structure of the metal vertical frame 5A and the resin vertical frame 8A, illustration thereof is omitted in FIGS. 2 to 3, and description thereof is also omitted.

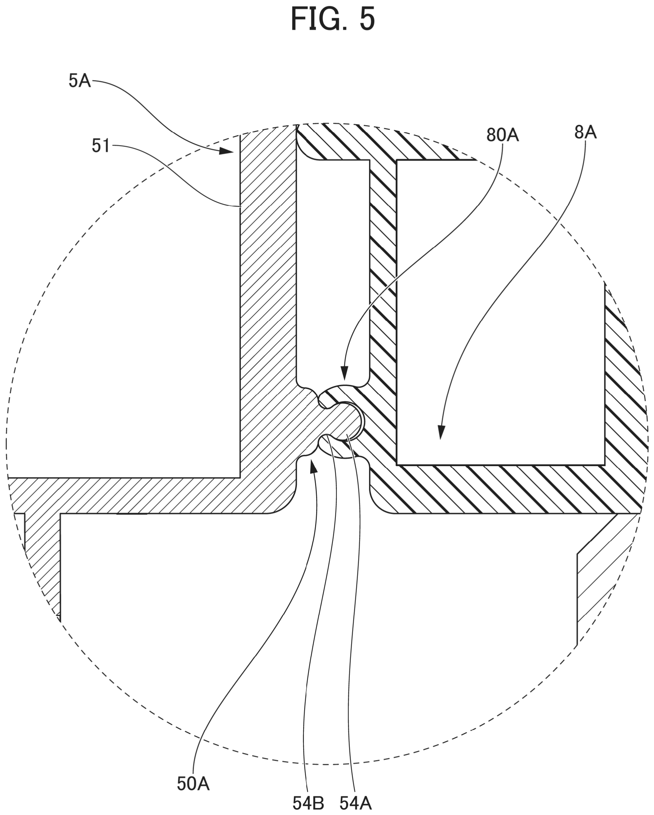

The metal vertical frame 5A and the resin vertical frame 8A of the left and right vertical frames 4 will be described in detail with reference to FIG. 5. The insertion portion 50A provided in the metal vertical frame 5A includes a convex portion 54A having a circular cross section and a neck portion 54B. The locking portion 80A of the resin vertical frame 8A is formed of a C-shaped concave portion. In the present embodiment, the engaging portion constitutes a fitting portion. When the convex portion 54A is fitted into the locking portion 80A, the convex portion 54A and the locking portion 80A are engaged with each other, and the convex portion 54A and the locking portion 80A are fixed to each other. Next, a method for assembling the metal vertical frame 5A and the resin vertical frame 8A of the left and right vertical frames 4 will be described. The locking portion 80A is pressed against the insertion portion 50A. Accordingly, the locking portion 80A pressed against the insertion portion 50A is elastically deformed such that an opening of the concave portion is largely opened, and is fitted so as to wrap the convex portion 54A having a circular shape, and is fixed by holding the neck portion 54B.

Similar to the first embodiment, according to this structure, at the time of assembling the metal vertical frame 5A and the resin vertical frame 8A, since a separate step such as fixing of a screw or crimping is unnecessary, and the assembly can be easily and reliably performed, there is an effect of facilitating construction.

Next, a method for separating the above-described engagement structure will be described. By pulling the resin vertical frame 8A away from the metal vertical frame 5A, the locking portion 80A is elastically deformed to climb over the convex portion 54A having a circular shape, and thus the fitting between the insertion portion 50A and the locking portion 80A can be released with a small force.

Similar to the first embodiment, since the fitting between the metal vertical frame 5A and the resin vertical frame 8A can be easily and reliably released, there is an effect of facilitating classification of resources and promoting recycling.

The present disclosure is not limited to the above-described embodiment in which the metal vertical frame serving as the metal member and the resin vertical frame serving as the vinyl chloride-based resin member are assembled. For example, the present disclosure can also be implemented by engaging a metal stile serving as the metal member with a vinyl chloride-based resin stile serving as the vinyl chloride-based resin member in the outer panel 6 illustrated in FIG. 2. At the time of removing the stiles from the outer panel 6, an engaging portion between the metal stile and the vinyl chloride-based resin stile on a vertical stile can be seen only after a lateral stile is removed. When the vertical stile is removed, the above-described engaging portion on the lateral stile can be seen. In a case where a first engaging portion and a second engaging portion having the same configuration as those of the first embodiment are provided, an insertion portion of the above-described flathead screwdriver or the like can be recognized only when one of the vertical stile and the lateral stile is removed.

In the second embodiment, the metal vertical frame 5A includes the insertion portion 50A having a circular tip, and the resin vertical frame 8A includes the C-shaped locking portion 80A to which the insertion portion 50A can be fixed, but the present disclosure is not limited to this configuration. For example, at least one of the metal vertical frame or the resin vertical frame may include an insertion portion having a circular tip, and the other thereof may include a C-shaped locking portion to which the insertion portion can be fixed.

### (Third Aspect of Present Disclosure)

Hereinafter, an embodiment of the present disclosure will be described in detail with reference to the drawings.

### [Composition for Sash]

The composition for a sash of the present embodiment contains a recycled vinyl chloride-based resin and an unused crosslinked vinyl chloride-based resin. Therefore, even when the composition for a sash of the present embodiment is extrusion-molded, the crosslinked vinyl chloride-based resin does not melt, so that a surface of the sash becomes matte. As a result, defective appearance due to the use of the recycled vinyl chloride-based resin recycled from a sash is less conspicuous.

A content of the unused crosslinked vinyl chloride-based resin in the composition for a sash of the present embodiment is preferably 3 mass% or more and 50 mass% or less. When the content of the unused crosslinked vinyl chloride-based resin in the composition for a sash of the present embodiment is 3 mass% or more, the defective appearance due to the use of the recycled vinyl chloride-based resin recycled from a sash is less conspicuous, and when the content is 50 mass% or less, extrusion moldability of the composition for a sash of the present embodiment is improved.

In the present description and claims, the vinyl chloride-based resin means a resin having a constituent unit derived from vinyl chloride. Here, the vinyl chloride-based resin is classified into a crosslinked vinyl chloride-based resin and a non-crosslinked vinyl chloride-based resin. Examples of the crosslinked vinyl chloride-based resin include a gel insoluble in tetrahydrofuran.

The non-crosslinked vinyl chloride-based resin may be a homopolymer of vinyl chloride (polyvinyl chloride), or may be a copolymer of vinyl chloride and a monofunctional monomer copolymerizable with vinyl chloride.

The crosslinked vinyl chloride-based resin may be a copolymer of vinyl chloride and a polyfunctional monomer copolymerizable with vinyl chloride, or may be a copolymer of vinyl chloride, a polyfunctional monomer copolymerizable with vinyl chloride, and a monofunctional monomer copolymerizable with vinyl chloride.

Examples of the monofunctional monomer copolymerizable with vinyl chloride include α-olefins, vinyl esters, vinyl ethers, (meth)acrylic acid esters, aromatic vinyls, and N-substituted maleimides, and two or more kinds thereof may be used in combination.

Examples of the α-olefins include ethylene, propylene, and butylene. Examples of the vinyl esters include vinyl acetate and vinyl propionate. Examples of the vinyl ethers include butyl vinyl ether and cetyl vinyl ether. Examples of the (meth)acrylic acid esters include methyl (meth)acrylate, ethyl (meth)acrylate, and butyl (meth)acrylate. Examples of the aromatic vinyls include styrene and α-methylstyrene. Examples of the N-substituted maleimides include N-phenylmaleimide and N-cyclohexylmaleimide.

Here, (meth)acrylate means acrylate or methacrylate, and (meth)acrylic acid means acrylic acid or methacrylic acid.

Examples of the polyfunctional monomer copolymerizable with vinyl chloride include: diallyl esters of phthalic acids such as diallyl phthalate, diallyl isophthalate, and diallyl terephthalate; diallyl esters of ethylenically unsaturated dibasic acids such as diallyl maleate and diallyl maleate; diallyl esters of saturated dibasic acids such as diallyl adipate; divinyl ethers such as ethylene glycol divinylether, n-butanediol divinyl ether, and decanediol divinyl ether; di(meth)acrylic acid esters of polyhydric alcohols such as ethylene glycol dimethacrylate and diethylene glycol dimethacrylate; tri(meth)acrylic acid esters of polyhydric alcohols such as trimethylolethane trimethacrylate; diallyl cyanurate; triallyl isocyanurate; and triallyl trimellitate.

The copolymer of vinyl chloride may be a graft copolymer of vinyl chloride. The graft copolymer of vinyl chloride is obtained by graft-copolymerizing vinyl chloride with a polymer other than polyvinyl chloride. Examples of a polymer for graft-copolymerizing vinyl chloride include an ethylene-vinyl acetate copolymer, an ethylene-ethyl acrylate copolymer, an ethylene-butyl acrylate copolymer, an ethylene-methyl methacrylate copolymer, an ethylene-propylene copolymer, an acrylonitrile-butadiene copolymer, polyurethane, chlorinated polyethylene, and chlorinated polypropylene, and two or more kinds thereof may be used in combination.

The vinyl chloride-based resin may be used alone or in combination of two or more kinds thereof.

The composition for a sash of the present embodiment may further contain an additive.

The additive is not particularly limited, and examples thereof include a colorant, a flame retardant, a stabilizer, a lubricant, a processing aid, an antioxidant, and an ultraviolet absorber, and two or more kinds thereof may be used in combination.

A form of the composition for a sash of the present embodiment is not particularly limited, and examples thereof include powder and pellets.

### [Sash and Method for Producing Sash]

A sash of the present embodiment is produced by extrusion-molding the composition for a sash of the present embodiment. Therefore, in the sash of the present embodiment, irregularities caused by the cross-linked vinyl chloride-based resin are formed on the surface. An arithmetic average roughness Ra of the sash of the present embodiment is not particularly limited, and is, for example, 0.5 µm or more. A shape of the sash is not particularly limited, and a known shape can be used.

The method for producing a sash of the present embodiment includes a step of extrusion-molding the composition for a sash of the present embodiment. When the sash of the present embodiment is produced, for example, the extrusion molding machine 100 illustrated in FIG. 1 is used. The extrusion molding machine 100 includes the extruder 110 that extrudes the composition for a sash of the present embodiment, the die 120, and the cooler 130. The extruder 110 includes the hopper 111 into which the composition for a sash of the present embodiment is introduced. Here, the composition for a sash of the present embodiment introduced into the hopper 111 is heated to a predetermined temperature by the extruder 110 and extruded as a molten material. The molten material passes through the die 120 to have a predetermined shape, and then passes through the cooler 130 to obtain the extrusion-molded product E. The extrusion-molded product E is cut into any length to obtain the sash of the present embodiment.

### [Method for Producing Recycled Vinyl Chloride-based Resin]

The method for producing a recycled vinyl chloride-based resin is not particularly limited, and a known method can be used. For example, first, a foreign substance such as a metal is removed from the sash and then the sash is crushed. Next, the obtained powder is washed and then dried to obtain a recycled vinyl chloride-based resin.

### (Fourth Aspect of Present Disclosure)

Hereinafter, an embodiment of the present disclosure will be described in detail with reference to the drawings.

A method for producing a sash of the present embodiment includes a first step of obtaining a recycled vinyl chloride-based resin from a used sash, and a second step of extrusion-molding a composition for a sash containing the recycled vinyl chloride-based resin and a stabilizer. The stabilizer is at least one selected from the group consisting of a calcium-zinc-based stabilizer, a barium-zinc-based stabilizer, and a tin-based stabilizer.

In the present description and claims, the vinyl chloride-based resin means a resin having a constituent unit derived from vinyl chloride.

Examples of the calcium-zinc-based stabilizer include a mixture of calcium stearate and zinc stearate. Examples of the barium-zinc-based stabilizer include a mixture of barium stearate and zinc stearate. Examples of the tin-based stabilizer include dibutyltin mercaptide, dibutyltin dilaurate, dibutyltin maleate, and octyltin mercaptide.

A mass ratio of the stabilizer to the recycled vinyl chloride-based resin in the composition for a sash is 1% or more and 5% or less. When the mass ratio of the stabilizer to the recycled vinyl chloride-based resin in the composition for a sash is 1% or more, foaming is prevented even when the composition for a sash is extrusion-molded, and when the mass ratio is 5% or less, the strength of the sash is improved.

The composition for a sash may further contain an additive.

The additive is not particularly limited, and examples thereof include a colorant, a flame retardant, a lubricant, a processing aid, an antioxidant, and an ultraviolet absorber, and two or more kinds thereof may be used in combination.

A form of the composition for a sash is not particularly limited, and examples thereof include powder and pellets.

### [First Step]

A method for obtaining the recycled vinyl chloride-based resin from a used sash is not particularly limited, and a known method can be used. For example, first, a foreign substance such as a metal is removed from the used sash and then crushed. Next, the obtained powder is washed and then dried to obtain a recycled vinyl chloride-based resin.

In a case where the used sash contains a vinyl chloride-based resin and a lead-based stabilizer, the lead-based stabilizer is removed from the powder to obtain a recycled vinyl chloride-based resin. A method for removing the lead-based stabilizer from the powder is not particularly limited, and a known method can be used. For example, the vinyl chloride-based resin contained in the powder is dissolved in a solvent, and then centrifuged to remove the lead-based stabilizer (for example, see Japanese Unexamined Patent Application, Publication No. 2000-285756).

Examples of the lead-based stabilizer include tribasic lead sulfate, dibasic lead phthalate, dibasic lead stearate, and lead stearate.

A content of the lead-based stabilizer in the recycled vinyl chloride-based resin is preferably 5 mass% or less.

At the time of obtaining the recycled vinyl chloride-based resin, a waste material other than the used sash may be used.

### [Second Step]

At the time of extrusion-molding the composition for a sash, for example, the extrusion molding machine 100 illustrated in FIG. 1 is used. The extrusion molding machine 100 includes the extruder 110 that extrudes the composition for a sash, the die 120, and the cooler 130. The extruder 110 includes the hopper 111 into which the composition for a sash is introduced. Here, the composition for a sash introduced into the hopper 111 is heated to a predetermined temperature and extruded as a molten material by the extruder 110. The molten material passes through the die 120 to have a predetermined shape, and then passes through the cooler 130 to obtain the extrusion-molded product E. The extrusion-molded product E is cut into any length to obtain the sash. A shape of the sash is not particularly limited, and a known shape can be used.

Instead of introducing the composition for a sash into the hopper 111, components constituting the composition for a sash may be introduced into the hopper 111.

### [Vinyl Chloride-based Resin]

The vinyl chloride-based resin may be either a homopolymer (polyvinyl chloride) of vinyl chloride or a copolymer thereof. The copolymer of vinyl chloride is a copolymer of vinyl chloride and a monomer copolymerizable with vinyl chloride.

Examples of the monomer copolymerizable with vinyl chloride include α-olefins, vinyl esters, vinyl ethers, (meth)acrylic acid esters, aromatic vinyls, and N-substituted maleimides, and two or more kinds thereof may be used in combination.

Examples of the α-olefins include ethylene, propylene, and butylene. Examples of the vinyl esters include vinyl acetate and vinyl propionate. Examples of the vinyl ethers include butyl vinyl ether and cetyl vinyl ether. Examples of the (meth)acrylic acid esters include methyl (meth)acrylate, ethyl (meth)acrylate, and butyl acrylate. Examples of the aromatic vinyls include styrene and α-methylstyrene. Examples of the N-substituted maleimides include N-phenylmaleimide and N-cyclohexylmaleimide.

Here, (meth)acrylate means acrylate or methacrylate, and (meth)acrylic acid means acrylic acid or methacrylic acid.

The copolymer of vinyl chloride may be a graft copolymer of vinyl chloride. The graft copolymer of vinyl chloride is obtained by graft-copolymerizing vinyl chloride with a polymer other than polyvinyl chloride. Examples of a polymer for graft-copolymerizing vinyl chloride include an ethylene-vinyl acetate copolymer, an ethylene-ethyl acrylate copolymer, an ethylene-butyl acrylate copolymer, an ethylene-methyl methacrylate copolymer, an ethylene-propylene copolymer, an acrylonitrile-butadiene copolymer, polyurethane, chlorinated polyethylene, and chlorinated polypropylene, and two or more kinds thereof may be used in combination.

The vinyl chloride-based resin may be used alone or in combination of two or more kinds thereof.

### (Fifth Aspect of Present Disclosure)

A technique for promoting reuse of resources contained in waste to be discarded at the time of renovating building materials, facilities, devices, and the like installed in buildings such as houses will be described. In an embodiment of the present disclosure, a case of renovating a resin sash installed in a house will be mainly described. A load on the environment can be reduced by collecting an existing resin sash that becomes a waste material when renovating the resin sash, and recycling a resin contained in the resin sash for reuse.

The resin sash is a sash (window frame) formed of a resin such as vinyl chloride. The sash may be entirely formed of resin, or may be formed of resin and a metal such as aluminum. The resin contained in the resin sash can be recycled into a raw material by being pulverized to remove impurities, and can be reused as a sash or another resin product.

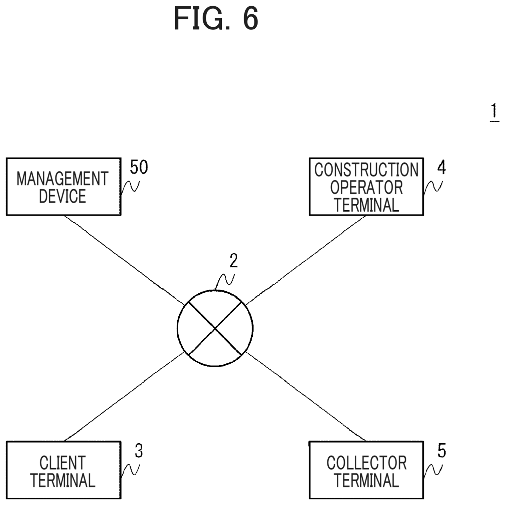

FIG. 6 illustrates a configuration of a management system according to the embodiment. A management system 1 includes a management device 50, a client terminal 3, a construction operator terminal 4, a collector terminal 5, and a communication network 2 such as the Internet that communicably connects them.

The management device 50 manages renovation and recycling of the resin sash. The management device 50 may be operated by a manufacturer of the resin sash, may be operated by a collector, or may be operated by a client. In the present embodiment, an example in which the management device 50 is operated by a manufacturer of the resin sash will be described.

The client terminal 3 is a terminal device that is to be used by a client of the renovation. The construction operator terminal 4 is a terminal device that is to be used by a construction operator who carries out the renovation of the resin sash. The collector terminal 5 is a terminal device that is to be used by a collector who collects an existing resin sash to be discarded at the time of renovation.

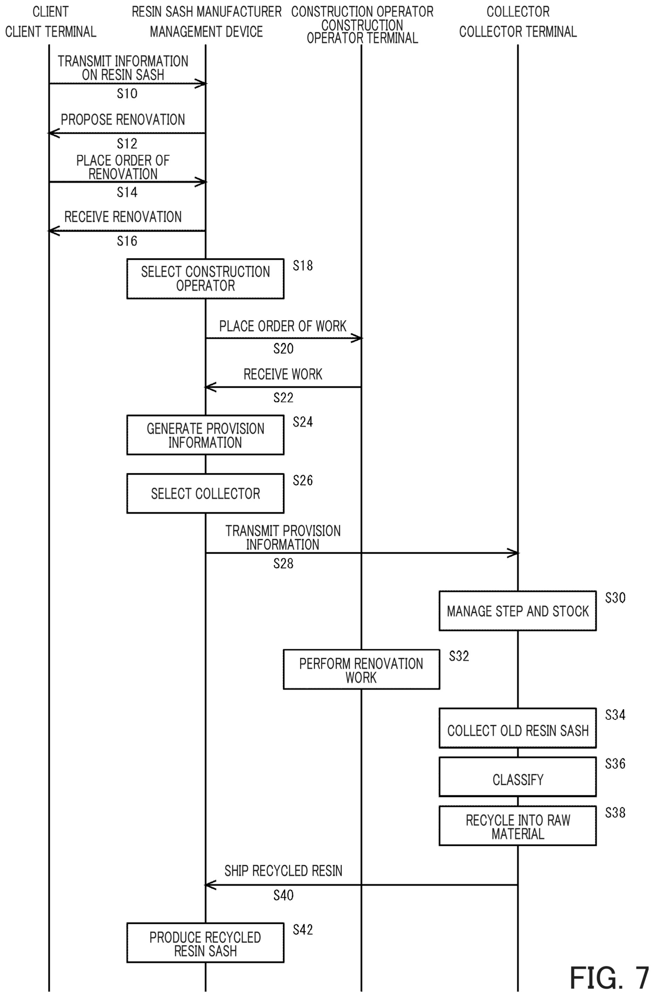

FIG. 7 is a sequence diagram illustrating a procedure of a management method according to the embodiment. In order to examine the renovation of the resin sash installed in the house, the client transmits information related to the existing resin sash from the client terminal 3 to the management device 50 (S10). The information related to the existing resin sash may include information such as a type, a manufacturer, a color, a size, a product number, a number, and a state of the existing resin sash, years from installation of the resin sash, a region of an installation place of the resin sash, an environment such as a temperature, a humidity, and sunshine. The management device 50 selects a resin sash that can be installed instead of the existing resin sash based on the information on the existing resin sash received from the client terminal 3, and transmits information related to the selected resin sash to the client terminal 3, thereby proposing renovation of the resin sash (S12). The client refers to the information received from the management device 50 to examine the renovation of the resin sash. When the resin sash to be installed is determined, the client places an order of the renovation from the client terminal 3 to the management device 50 (S14). The management device 50 transmits an order to receive the renovation to the client terminal 3 (S16).

The management device 50 selects a construction operator who can perform a renovation work of the resin sash (S18), and places an order of the renovation work to the selected construction operator (S20). When receiving the order to receive the renovation work, the construction operator adjusts a schedule or the like of the renovation work with the client, and transmits information such as the schedule or the like of the renovation work from the construction operator terminal 4 to the management device 50 (S22).

The management device 50 generates provision information to be provided to the collector based on the information related to the existing resin sash received from the client terminal 3 and the information such as the schedule or the like of the renovation work received from the construction operator terminal 4 (S24). The provision information may include information such as a schedule of the renovation work; a type, a manufacturer, a color, a size, a product number, a number, or a state of the resin sash collected in the renovation work; years from installation of the resin sash; a region of an installation place of the resin sash; an environment including temperature, humidity, or sunlight ; a type, a color, or an amount of a resin contained in the resin sash; a type or an amount of a material other than the resin contained in the resin sash; or a type, a color, or an amount of a material such as a resin contained in a component attached to the resin sash. The management device 50 may estimate a state of the resin sash based on the information such as the type, the manufacturer, the color, or the product number of the resin sash, the years from installation of the resin sash, the region of an installation place of the resin sash, the environment including temperature, humidity, or sunlight. The management device 50 may acquire information such as the type, the color, or the amount of the resin contained in the existing resin sash, the type or the amount of the material other than the resin contained in the resin sash, or the type, the color, or the amount of the material such as the resin contained in the component attached to the resin sash from a web server or the like of the manufacturer of the resin sash based on the product number or the like of the existing resin sash.

The management device 50 selects a collector who collects the existing resin sash (S26), and transmits generated provision information to the collector terminal 5 of the selected collector (S28). The collector refers to the provision information received from the management device 50 and manages a step of a recycling process of the resin sash, a stock of the resin sash or the resin, a shipping date, a shipping destination, a shipping volume, or the like of a resin recycled into a raw material (S30). The management device 50 transmits the provision information to the collector terminal 5 before the renovation work is performed so as to ensure a time required for the collector to adjust the step of the recycling process of the resin sash or to adjust the stock of the resin sash or the resin. For example, the management device 50 may transmit the provision information to the collector terminal 5 by the day before a construction date of the renovation work. The collector may transmit a scheduled shipping date or a scheduled shipping volume of the resin recycled into a raw material from the collector terminal 5 to the management device 50.

The construction operator visits a house of the client on a date of the renovation work and performs the renovation work (S32). The collector collects the resin sash removed by the construction operator in the renovation work (S34). The collector disassembles the resin sash to classify the resin and aluminum (S36). The collector pulverizes the resin to remove impurities, and recycles the resin into a raw material (S38). Materials other than the resin, such as aluminum, may be provided to another operator and recycled into a raw material, or may be recycled into a raw material by a collector.

The recycled resin that has been recycled into a raw material by the collector is shipped to a resin sash manufacturer (S40). The resin sash manufacturer produces a resin sash by using the recycled resin received from the collector (S42). If necessary, the resin sash manufacturer may produce a resin sash by mixing a new raw material into the recycled raw material.

According to the management method for the present embodiment, since the collector can know in advance the type and the number of the resin sash collected in the renovation work, the type and the amount of the resin contained in the resin sash, the type and the amount of the material other than the resin contained in the resin sash, information related to the component attached to the resin sash, and the like, a content of the recycling process can be determined in advance. In addition, since the collector can know in advance the information related to classification such as the type and the amount of the material other than the resin, such as aluminum, contained in the resin sash, a content of the classification, the shipping date, the shipping destination, the shipping volume, and the like of the classified aluminum can be determined in advance. In addition, since the collector can know in advance a collection date of the resin sash, a schedule of the recycling process can be determined in advance. Further, since the collector can know in advance the type, the color, the amount, and the like of the resin obtained by the recycling process of the resin sash, the stock of the resin recycled into a raw material can be managed and the shipping date, the shipping destination, the shipping volume, and the like can be adjusted. Since it is difficult to decolorize a colored resin, it is necessary to manage the stock of the resin recycled into a raw material in consideration of not only the type of the resin but also the color. However, according to the management method of the present embodiment, since the collector can know in advance the type, the color, the amount, and the like of the resin obtained by the recycling process of the resin sash, the stock of the resin recycled into a raw material can be appropriately managed and the shipping date, the shipping destination, the shipping volume, and the like can be adjusted. Accordingly, reuse of the resin can be promoted, and spread of the resin sash can be promoted.

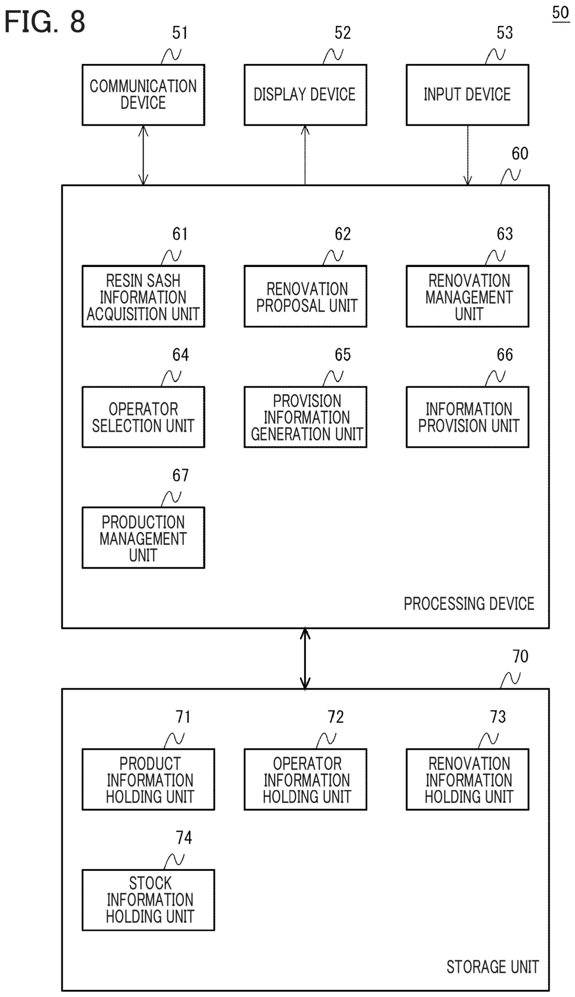

FIG. 8 illustrates a configuration of a management device according to the embodiment. The management device 50 includes a communication device 51, a display device 52, an input device 53, a processing device 60, and a storage device 70. The management device 50 may be a server device, a device such as a personal computer, or a mobile terminal such as a mobile phone terminal, a smartphone, or a tablet terminal.

The communication device 51 controls communication with other devices via a communication network such as a wireless LAN or the Internet. The communication device 51 may perform communication by any wired or wireless communication method. The display device 52 displays a screen generated by the processing device 60. The display device 52 may be a liquid crystal display device, an organic EL display device, or the like. The input device 53 transmits an instruction input by a user or an administrator of the management device 50 to the processing device 60. The input device 53 may be a mouse, a keyboard, a touch pad, or the like. The display device 52 and the input device 53 may be implemented as a touch panel.

The storage device 70 stores programs, data, and the like to be used by the processing device 60. The storage device 70 may be a semi-conductor memory, a hard disk, or the like. The storage device 70 includes a product information holding unit 71, an operator information holding unit 72, and a stock information holding unit 73.

The product information holding unit 71 holds information on a product such as the resin sash. The product information holding unit 71 holds information such as a type, a color, a size, a product number, an image, a catalog, and an instruction manual of the resin sash produced by the resin sash manufacturer.

The operator information holding unit 72 holds information on the construction operator and the collector. The operator information holding unit 72 holds information such as a name, a location, and a contact address of the construction operator, a type of a product that can be constructed, a construction cost, a date on which construction can be performed, a reputation, and a specialist field. The operator information holding unit 72 holds information such as a name, a location, and a contact address of the collector, a type, a color, and a number of the resin sash that can be collected, a collection cost, a date on which collection can be performed, a reputation, and a specialist field.

The stock information holding unit 73 holds information on a raw material of the resin sash owned by the resin sash manufacturer. The stock information holding unit 73 holds a stock quantity for each type, color, and state of a new resin raw material and a recycled resin raw material. The stock information holding unit 73 may hold a scheduled reception volume for each type, color, and state of the recycled resin raw material scheduled to be received from the collector.

The processing device 60 includes a resin sash information acquisition unit 61, a renovation proposal unit 62, a renovation management unit 63, an operator selection unit 64, a provision information generation unit 65, an information provision unit 66, and a production management unit 67. These configurations thereof are implemented by any circuit, a CPU of a computer, a memory, or another LSI in terms of hardware, and are implemented by a program or the like loaded into a memory in terms of software, but here, functional blocks implemented by cooperation of those are depicted. Therefore, it will be understood by those skilled in the art that these functional blocks can be implemented in various forms such as hardware alone or a combination of hardware and software.

The resin sash information acquisition unit 61 acquires information on the existing resin sash from the client terminal 3. The resin sash information acquisition unit 61 is an example of the waste material information acquisition unit of the present disclosure.

The renovation proposal unit 62 refers to the product information holding unit 71 and selects a resin sash that can be installed instead of the existing resin sash based on the information acquired by the resin sash information acquisition unit 61 and the like, reads information on the selected resin sash from the product information holding unit 71, and transmits the information to the client terminal 3.

The renovation management unit 63 manages renovation of the resin sash. When an order of renovation is received from the client terminal 3, the renovation management unit 63 acquires information required for the renovation from the client terminal 3 and receives the renovation. The information required for the renovation may include an address of a building in which the resin sash to be renovated is installed, a name, a contact address of the client, and a request of the client.

The operator selection unit 64 refers to the operator information holding unit 72 and selects a construction operator and a collector based on the information on the existing resin sash acquired by the resin sash information acquisition unit 61, the information related to the renovation acquired by the renovation management unit 63, and the like. The operator selection unit 64 may select an operator close to the building to be renovated. The operator selection unit 64 may select the construction operator according to a type, a size, a product number, a number, and the like of a resin sash to be newly installed. The operator selection unit 64 may select the collector according to a type, a color, a size, a product number, a number, and the like of the existing resin sash. The operator selection unit 64 may select the collector according to a type, a color, an amount, and the like of a resin raw material obtained by recycling the existing resin sash. The operator selection unit 64 may select the collector according to a stock quantity of the collector for each type, color, and amount of the resin raw material obtained by recycling the existing resin sash.

The provision information generation unit 65 generates provision information to be provided to the collector based on the information related to the existing resin sash acquired by the resin sash information acquisition unit 61 and the information such as the schedule of the renovation work received from the construction operator terminal 4. The provision information generation unit 65 may generate different provision information according to the collector. The provision information generation unit 65 may generate provision information of a content requested by the collector.

The renovation management unit 63 places an order of a renovation work to the construction operator selected by the operator selection unit 64. The renovation management unit 63 acquires a construction date of the renovation work from the construction operator and manages a schedule of the renovation work. The renovation management unit 63 places an order of collecting the resin sash by the collector selected by the operator selection unit 64. The information provision unit 66 transmits the provision information generated by the provision information generation unit 65 to the collector terminal 5. The renovation management unit 63 acquires the scheduled shipping date and the scheduled shipping volume of the recycled resin raw material from the collector terminal 5 and manages the stock of the recycled resin raw material.

The production management unit 67 manages the production of the resin sash by the resin sash manufacturer. The production management unit 67 manages the production of the resin sash according to the stock quantity and the scheduled reception volume of the new resin raw material and the recycled resin raw material held in the stock information holding unit 73, an order quantity of the resin sash, and the like. In a case where a new resin sash using the new resin raw material and a recycled resin sash using the recycled resin raw material are separately sold, the production management unit 67 manages production of the new resin sash according to the stock quantity and the scheduled reception volume of the new resin raw material and an order quantity of the new resin sash, and manages production of the recycled resin sash according to the stock quantity and the scheduled reception volume of the recycled resin raw material and an order quantity of the recycled resin sash. In a case where the recycled resin sash is produced by mixing the recycled resin raw material with the new resin raw material, the production management unit 67 manages the production of the recycled resin sash according to the stock quantities and the scheduled reception volumes of the recycled resin raw material and the new resin raw material, and the order quantity of the recycled resin sash. In a case where a composition ratio between the recycled resin raw material and the new resin raw material which are raw materials of the recycled resin sash is made variable, the production management unit 67 may determine the composition ratio according to the stock quantities and the scheduled reception volumes of the recycled resin raw material and the new resin raw material.

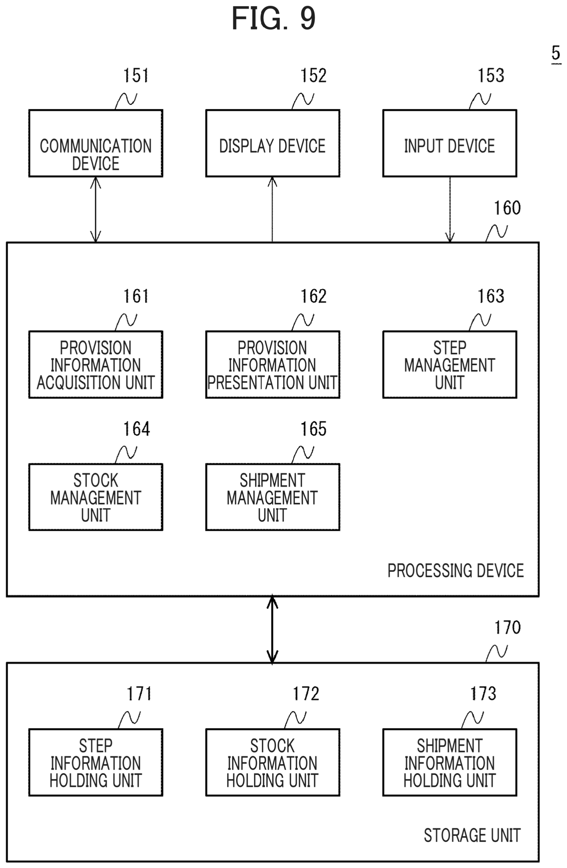

FIG. 9 illustrates a configuration of the collector terminal 5 according to the embodiment. The collector terminal 5 includes a communication device 151, a display device 152, an input device 153, a processing device 160, and a storage device 170. The collector terminal 5 may be a device such as a personal computer, or may be a mobile terminal such as a mobile phone terminal, a smartphone, or a tablet terminal.

The communication device 151 controls communication with other devices via a communication network such as a wireless LAN or the Internet. The communication device 151 may perform communication by any wired or wireless communication method. The display device 152 displays a screen generated by the processing device 160. The display device 152 may be a liquid crystal display device, an organic EL display device, or the like. The input device 153 transmits an instruction input by a user or an administrator of the collector terminal 5 to the processing device 160. The input device 153 may be a mouse, a keyboard, a touch pad, or the like. The display device 152 and the input device 153 may be implemented as a touch panel.

The storage device 170 stores programs, data, and the like to be used by the processing device 160. The storage device 170 may be a semi-conductor memory, a hard disk, or the like. The storage device 170 includes a step information holding unit 171, a stock information holding unit 172, and a shipment information holding unit 173.

The step information holding unit 171 holds information on a step of a collector collecting a resin sash and recycling a resin raw material. The step information holding unit 171 holds information such as a schedule and performance including a content, a construction date, a construction time, the number of persons in construction, and an operator of each step.

The stock information holding unit 172 holds information on the resin sash and the recycled resin raw material owned by the collector. The stock information holding unit 172 holds information such as a stock quantity of the resin sash for each type and color, and the stock quantity of the recycled resin raw material for each type, color, and state. The stock information holding unit 172 may hold a scheduled collection amount of the resin sash to be collected for each type and color.

The shipment information holding unit 173 stores information related to shipping of the recycled resin raw material recycled by the collector. The shipment information holding unit 173 holds information such as a name, a location, and a contact address of the shipping destination, and a schedule and performance including a stock quantity, a demand amount, and a shipping volume of the recycled resin raw material.

The processing device 160 includes a provision information acquisition unit 161, a provision information presentation unit 162, a step management unit 163, a stock management unit 164, and a shipment management unit 165. These configurations thereof are implemented by any circuit, a CPU of a computer, a memory, or another LSI in terms of hardware, and are implemented by a program or the like loaded into a memory in terms of software, but here, functional blocks implemented by cooperation of those are depicted. Therefore, it will be understood by those skilled in the art that these functional blocks can be implemented in various forms such as hardware alone or a combination of hardware and software.

The provision information acquisition unit 161 acquires provision information generated by the management device 50 from the management device 50.

The provision information presentation unit 162 displays the provision information acquired by the provision information acquisition unit 161 on the display device 152.

The step management unit 163 manages the step of the collector collecting the resin sash and recycling the resin raw material based on the provision information acquired by the provision information acquisition unit 161, the stock information held in the stock information holding unit 172, the shipment information held in the shipment information holding unit 173, and the like. The step management unit 163 creates a step plan based on the above information and stores the step plan in the step information holding unit 171. The step management unit 163 refers to the step information held in the step information holding unit 171, and displays information related to a step to be performed on the display device 152, transmits the information related to the step to be performed to the operator, or transmits information related to a step that has not been performed even after the scheduled construction date.

The stock management unit 164 manages the stock of the resin sash and the recycled resin raw material owned by the collector based on the provision information acquired by the provision information acquisition unit 161, the stock information held in the stock information holding unit 172, the shipment information held in the shipment information holding unit 173, and the like. The stock management unit 164 updates the stock quantity of the resin sash when the resin sash is collected and stored in a resin sash storage area or when the resin sash in stock is processed. The stock management unit 164 updates the stock quantity of the recycled resin raw material when the resin raw material is recycled and stored in a recycled resin raw material storage area or when the recycled resin raw material in stock is shipped.

The shipment management unit 165 manages the shipping of the recycled resin raw material from the collector to the resin sash manufacturer or the like based on the provision information acquired by the provision information acquisition unit 161, the stock information held in the stock information holding unit 172, the shipment information held in the shipment information holding unit 173, and the like. The shipment management unit 165 adjusts the shipping destination, the scheduled shipping date, the scheduled shipping volume, and the like of the recycled resin raw material according to a stock quantity, a demand amount, and the like of the recycled resin raw material of the shipping destination for each type and color, and stores the adjusted shipping destination, scheduled shipping date, scheduled shipping volume, and the like in the step information holding unit 171.

The step management unit 163 manages steps such as the collection of the resin sash and the processing of the resin sash such that the stock quantity of the resin sash does not exceed a capacity of the resin sash storage area, based on the capacity of the resin sash storage area, the stock quantity of the resin sash, and the amount of the resin sash to be collected. The step management unit 163 manages steps such as the processing of the resin sash and the shipping of the recycled resin raw material such that the stock quantity of the recycled resin raw material does not exceed a capacity of the recycled resin raw material storage area, based on the capacity of the recycled resin raw material storage area, the stock quantity of the recycled resin raw material, and the amount of the recycled resin raw material to be shipped.

Although the present disclosure has been described based on the embodiment, the embodiment merely illustrates the principle and application of the present disclosure. In addition, many modifications and arrangement changes are possible in the embodiment without departing from the spirit of the present disclosure defined in the claims.

In the embodiment, an example in which the waste material of the resin sash generated in the renovation work is collected and the resin raw material is recycled has been described, but the technique of the present disclosure is also applicable to a case in which any waste material generated in the renovation work is collected and processed.

### (Sixth Aspect of Present Disclosure)

### (Resin Molded Product)

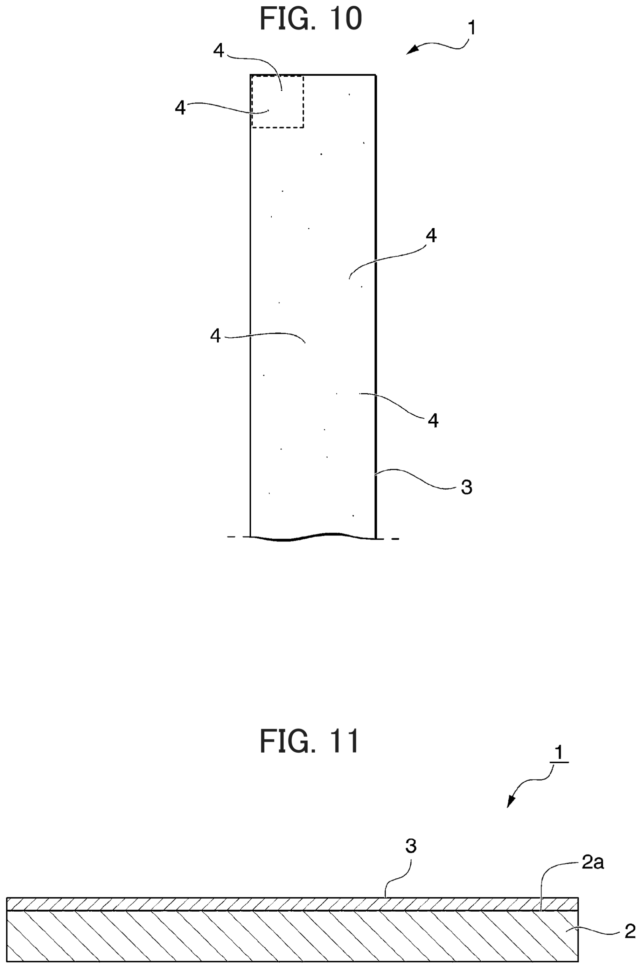

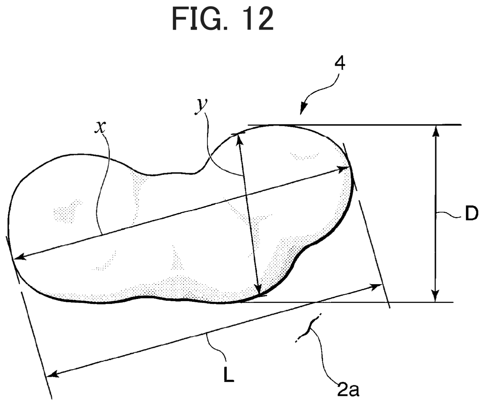

Hereinafter, an embodiment of a resin molded product, a method for producing a resin molded product, a resin extrusion-molded product, and a method for producing a resin extrusion-molded product will be described with reference to the drawings. FIG. 10 is a schematic view illustrating one surface of the resin molded product according to the embodiment of the present disclosure. FIG. 11 is a cross-sectional view along a thickness direction of the resin molded product according to the embodiment of the present disclosure. FIG. 12 is a schematic view illustrating a foreign substance of the resin molded product according to the embodiment of the present disclosure.

As illustrated in FIGS. 10 and 11, a resin molded product 1 includes: a base material portion 2; and a surface layer 3 formed on a surface 2a of the base material portion 2. The resin molded product 1 includes a foreign substance 4. Specifically, the base material portion 2 includes the foreign substance 4.

The base material portion 2 is formed of a resin molded body containing a virgin resin raw material and a recycled material. An unused new produced resin raw material is referred to as the "virgin resin raw material". A material obtained from a processed resin member is referred to as the "recycled material".

The recycled material is, for example, a resin material sorted and collected from collected products obtained by collecting a resin product contained in waste of a spent building material, waste of a resin product generated in a producing process of a factory, waste generated in a construction site, and the like.

A molding material prepared to obtain the base material portion 2 includes the virgin resin raw material and the recycled material. The molding material contains at least one of an impact resistance modifier, a weather resistance material, a heat stabilizer, a processing aid, a filler, a lubricant, or a pigment in addition to a main agent. The main agent is, for example, polyvinyl chloride resin (hereinafter, referred to as "PVC resin"). A raw material blending ratio of the molding material is adjusted according to components and a blending amount of the recycled material. The recycled material is mainly added as a raw material of the main agent. Accordingly, according to an amount of the main agent contained in the recycled resin material, a content of the virgin resin raw material is also determined. Details will be described later.

The base material portion 2 is obtained by molding a material obtained by kneading the above-described molding material. A matrix resin of the base material portion 2 is, for example, a resin containing polyvinyl chloride, ABS, high-density polyethylene, low-density polyethylene, polypropylene, polystyrene, or nylon.

The base material portion 2 contains the foreign substance 4 derived from a recycled material. The foreign substance 4 is formed of a resin different from the matrix resin or a metal. The foreign substance 4 is mixed in the matrix resin of the base material portion 2. In addition, the foreign substances 4 existing on the surface 2a of the base material portion 2 and in the vicinity thereof are exposed on the surface 2a of the base material portion 2 and in the vicinity thereof as illustrated in FIG. 10. The vicinity of the surface 2a of the base material portion 2 is a region on a surface 2a side of the base material portion 2 in a cross section in the thickness direction of the base material portion 2. That is, the vicinity of the surface 2a of the base material portion 2 is a surface layer of the base material portion 2.

A thickness of the base material portion 2 is preferably 0.5 mm or more and 4 mm or less, and more preferably 1 mm or more and 3 mm or less. When the thickness of the base material portion 2 is less than the above lower limit value, the molding material is difficult to flow, and molding is difficult to be performed. When the thickness of the base material portion 2 exceeds the above upper limit value, cooling after molding takes time, productivity is reduced, and a usage amount of the molding material is increased, and thus a material more than necessary is used.

The base material portion 2 may contain an additive. Examples of the additive include a high molecular weight processing aid. Since the base material portion 2 contains the additive, a tensile elongation rate of the resin molded product 1 is improved, and the resin molded product 1 has sufficient strength (difficulty in breaking) as a fitting.

A content of the additive with respect to the total weight (100 wt%) of the base material portion 2 is preferably 0.05 wt% or more and 3 wt% or less, and more preferably 0.5 wt% or more and 1.5 wt% or less. When the content of the additive is less than the above lower limit, an effect of tensile elongation at break cannot be obtained. When the content of the additive exceeds the above upper limit value, a maximum value of the tensile elongation at break does not change, and thus the material is unnecessarily added.

Since the foreign substance 4 is derived from foreign substances mixed in the recycled material, the foreign substance 4 has various shapes. The foreign substance 4 is exposed in an irregular shape different from a design shape of the molding. Examples of the foreign substance 4 include: an irregular shape including a portion slightly protruding from the surface 2a of the base material portion 2; and a portion that is present in the vicinity of the surface 2a of the base material portion 2 and does not protrude from the surface 2a of the base material portion 2, but is exposed due to a change in color or the like.

The foreign substance 4 has an irregular shape. A size of the foreign substance 4 exposed on the surface 2a of the base material portion 2 and in the vicinity thereof can be measured by a microscope, image processing, or the like. Specifically, as illustrated in FIG. 12, a linear distance between edge portions of the foreign substance 4 detected by a microscope or the like is measured. A length L of a portion where the linear distance between the edge portions is the longest is defined as a longest portion of the foreign substance 4. A largest dimension among diameters along a direction intersecting the longest portion L is defined as a minimum diameter y, and the minimum diameter y is a particle diameter of the foreign substance 4. The minimum diameter y of the foreign substance 4 is 355 µm or less, and preferably 250 µm or less. As a result of the minimum diameter y of the foreign substance 4 being 355 µm or less, the foreign substance 4 is inconspicuous in appearance, and even the resin molded product 1 produced by containing a recycled resin material can withstand practical use. Further, when the minimum diameter y of the foreign substance 4 is 250 µm or less, the foreign substance 4 cannot be visually recognized on the surface 2a of the base material portion 2 even when the thickness of the surface layer 3 is thin (0.25 mm to 0.3 mm).

The foreign substance 4 contains an organic material having a melting point higher than a melting point of the matrix resin (for example, polyvinyl chloride) or a thermosetting resin, or a metal. The foreign substance 4 is a component other than the virgin resin raw material and the additive during production. A material of the foreign substance 4 can be detected by, for example, a method for separating the exposed foreign substance 4 from the surface 2a of the base material portion 2 and the vicinity thereof and analyzing a component. A material of the foreign substance 4 present inside the base material portion 2 can be detected by, for example, a method for cutting the resin molded product 1, separating the foreign substance 4 exposed on a cut surface, and analyzing a component. For example, in a case where no foreign substance 4 is exposed, any position of the resin molded product 1 is cut out and component analysis is performed.

A lead content VPB of the resin molded product 1 satisfies 0 wt% < VPB ≤ 3 wt%. The virgin resin raw material does not contain lead. Since a work of removing lead is performed in a process of obtaining the recycled material, lead contained in the waste is removed. However, since the recycled resin material is obtained from the waste, a trace amount of lead may be contained. The resin molded product 1 is produced by using the recycled material and the virgin resin raw material that does not contain lead.

In the resin molded product 1, the number of foreign substances 4 present per unit area of the surface 2a of the base material portion 2 is preferably 6 or less on average. The foreign substance 4 exposed on the surface 2a of the base material portion 2 can be detected by various methods such as visual observation, using a microscope, light irradiation, and image processing. By such a method, a surface of the resin molded product 1 (surface 2a of base material portion 2) can be measured, and the number of the foreign substances 4 can be measured. In the resin molded product 1, when the number of the foreign substances 4 present per unit area of the surface 2a of the base material portion 2 is 6 or less on average, the number of foreign substances 4 exposed on the surface 2a of the base material portion 2 is extremely small. As a result, even the resin molded product 1 produced by containing a recycled resin material can withstand practical use.

The surface layer 3 contains an acrylic resin. Examples of the acrylic resin include a polymethyl methacrylate resin, an acrylate sthrene acrylonitrile (ASA) resin, and an acrylonitrile-ethylene-styrene copolymer (AES) resin. These may be used alone or in combination of two or more kinds thereof.

The thickness of the surface layer 3 is preferably 0.2 mm or more and 0.5 mm or less, and more preferably 0.3 mm or more and 0.5 mm or less. When the thickness of the surface layer 3 is less than the above lower limit value, the foreign substance 4 can be recognized. When the thickness of the surface layer 3 exceeds the above upper limit value, mechanical strength is reduced, and acrylic is unnecessarily added.

The above-described resin molded product 1 can be used, for example, as a molded component of at least any of fittings, construction materials for outdoor installation, and pavement materials. Examples of the fittings include a sash and a door. For example, the resin molded product 1 can be suitably used for a resin frame of a sash or a resin stile of a panel. Examples of the construction materials for outdoor installation include wood decks, construction materials for sun rooms, drain pans, and covers for air supply/exhaust ports. The pavement material is, for example, a pavement material for roads such as a laying material for a temporary road, and a laying material for a park and a sidewalk. The resin molded product 1 may be a reinforcing material that is embedded in soil, resin, concrete, or a wall surface coating material without being exposed to the outside after installation.

### (Method for Producing Resin Molded Product)

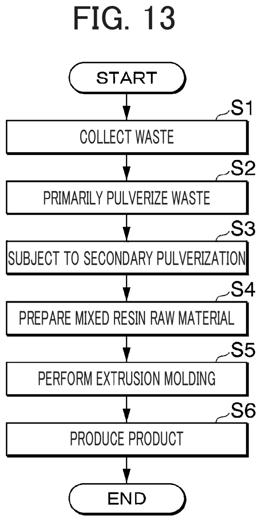

As illustrated in FIG. 13, the method for producing a resin molded product includes a step of obtaining a recycled raw material finer than primary powder by further subjecting the primary powder obtained by pulverizing a recycled material containing a resin to secondary pulverization (S3), a step of obtaining a mixed resin raw material by mixing a virgin resin raw material and the recycled raw material (S4), a step of performing extrusion molding using the mixed resin raw material and an acrylic resin (S5), and a step of obtaining a resin molded product (S6). Further, the method for producing a resin molded product includes a step of collecting waste (S1) and a step of obtaining primary powder by primarily pulverizing the waste (S2), in order to obtain the recycled material.

First, a method for obtaining the primary powder will be described. For example, a resin product contained in waste of a spent building material, waste of a resin product generated in a producing process of a factory, and waste generated in a construction site are collected (S1). The collection of the waste is not limited to a method for collecting the waste independently, and may be a method for acquiring the waste collected by a waste collection company. Next, the collected waste is classified into a resin component and a component other than a resin. The classified resin component is pulverized by a pulverizer, a hammer, or the like to obtain a mixed and pulverized product. Impurities such as a metal, a metal, and a soft resin are removed from the obtained mixed and pulverized product to obtain the primary powder. For the primary powder, a type of a resin contained in the primary powder may be sorted by a sorting method using wind, a sorting method in which a color is identified, or the like. The step of obtaining the primary powder from the waste may be performed in a series of steps of the resin molding method, or the primary powder processed by a recycle company or the like may be obtained in advance.

In a case where a resin frame of a sash is produced as the resin molded product 1, it is more preferable to obtain the primary powder by sorting waste of the resin frame of a sash (S2) during the waste collection (S1). There is a large amount of resin common to the molding material for obtaining the resin molded product 1 and the resin component contained in the recycled resin, recycling efficiency can be increased, and production efficiency can be increased.

Next, the primary powder is subjected to the secondary pulverization (S3). In the secondary pulverization, the primary powder is further subjected to the secondary pulverization to obtain a recycled raw material having a smaller particle diameter than a particle diameter of the primary powder. In the secondary pulverization, for example, the same pulverizer as in the primary pulverization is used. The recycled raw material may be processed into fine powder finer than a particle diameter of pellets of the main agent of the virgin resin raw material. Specifically, a pulverized product having a minimum diameter of 2 mm to 15 mm square is obtained by the primary pulverization, and then a recycled raw material which is a pulverized product having a minimum diameter of less than 355 µm is obtained by the secondary pulverization. In addition to a method for obtaining the recycled raw material having a minimum diameter of less than 355 µm only by the secondary pulverization process, a sieving process may be performed after the secondary pulverization to obtain the recycled raw material having a minimum diameter of less than 355 µm. For example, by removing particles having a minimum diameter of more than 355 µm by the sieving process, and then performing a pulverization process, a fine recycled raw material may be obtained while avoiding variation in particle diameter. The particle diameter of the recycled raw material may be less than an average particle diameter of a main raw material of the virgin resin raw material. When the primary powder is further subjected to the secondary pulverization to obtain a fine recycled raw material, it is possible to avoid the exposure of the foreign substance 4. When the fine recycled raw material is obtained, physical properties of the resin molded product 1 can be maintained at a high level. In the case of the sieving process, powder having a particle diameter of 355 µm or less is obtained. However, at the time of sieving, particles having a short side of less than 355 µm and a long side of 355 µm or more are not classified, and may be mixed in the recycled raw material. The minimum diameter is more preferably 250 µm or less. In this case, when a pulverized product having a minimum diameter of less than 10 mm is obtained by the primary pulverization, a recycled raw material having a minimum diameter of 250 µm or less can be obtained more efficiently after the secondary pulverization.

Next, a molding material is obtained by mixing a virgin resin raw material and a recycled raw material (S4). The molding material is, for example, a mixed resin raw material to which various materials are added in addition to the PVC resin. A content ratio of the recycled raw material contained in the molding material is, for example, 10 wt% or more. When the molding material contains 10 wt% or more of the recycled raw material, a recycling rate of the resin is improved. As a result of the molding material containing 10 wt% or more of the recycled raw material, it is possible to produce the resin molded product 1 that can withstand practical use even when a use rate of the recycled material is high.

For example, in a case where the resin molded product 1 is used as a non-exposed component that does not expose to the outside, it is not necessary to consider reduction in designability due to exposure of the foreign substance 4. In this case, for example, the content ratio of the recycled raw material contained in the molding material is, for example, 10 wt% or more. Since the resin molded product 1 of the present disclosure uses a recycled raw material processed into fine powder, the resin molded product 1 is hardly affected by reduction in physical properties due to the presence of the foreign substance 4. Specifically, since a surface area of the recycled resin material is increased by using a recycled raw material having a small particle diameter, the recycled material is easily melted, and extrusion performance can be kept good. As a result, the reduction in physical properties due to the foreign substance 4 can be avoided. In a case where the resin molded product 1 is used as a non-exposed component, the content of the recycled material can be further increased.

Next, the extrusion molding is performed (S5). For the extrusion molding, a method in the related art is used. In a case where the resin molded product 1 is produced as a resin frame of a sash, in a state in which the resin frame is installed, a portion exposed to the outside, that is, an exposed portion which is visually recognized in appearance is molded with a material that forms a surface layer on a material containing the virgin resin raw material and the recycled raw material of the recycled material, or is molded only with the virgin resin raw material, and a non-exposed portion which is not visually recognized in appearance is molded with a composite material formed with a material containing the virgin resin raw material and the recycled raw material of the recycled material. As the recycled raw material of the recycled material, a plurality of types of recycled raw materials, for example, a recycled raw material formed of a waste material of a resin fitting and a recycled raw material formed of a waste material generated in a factory may be mixed, or a recycled raw material formed of a waste material generated in a resin fitting or a factory or another waste material may be used. The base material portion 2 and the surface layer 3 of the resin molded product 1 are molded by two-color molding. The above exposed portion and non-exposed portion may be molded by two-color molding.

Thereafter, a finishing process is performed to produce the resin molded product 1 (S6). In the finishing process, a surface of the resin molded product 1 exposed to the outside may be coated with a pigment or the like. In addition, the surface may be covered by a resin sheet.

An example of a recycled resin product using a recycled material containing a recycled raw material will be described. For example, the recycled resin product is a recycled resin product formed by containing a first resin molded portion formed of a first resin material containing a recycled raw material of a recycled resin, and a second resin molded portion formed of a second resin material having a content ratio of the recycled resin material containing the recycled raw material lower than that of the first resin molded portion or containing no recycled material. In the recycled resin product, an exposed portion exposed in appearance during use is formed of the second resin molded portion, and a non-exposed portion located on an inner side of the exposed portion and not exposed in appearance during use is formed of the first resin molded portion. In the resin molded product 1, the foreign substance 4 may be exposed on the surface 2a of the base material portion 2, but the number of the exposed foreign substance 4 is extremely small, and sufficient physical strength is obtained. By such a recycled resin product, the exposed portion can obtain the same appearance as that of a non-recycled product, and a recycling rate of the resin material can be increased.

### (Resin Extrusion-molded Product)

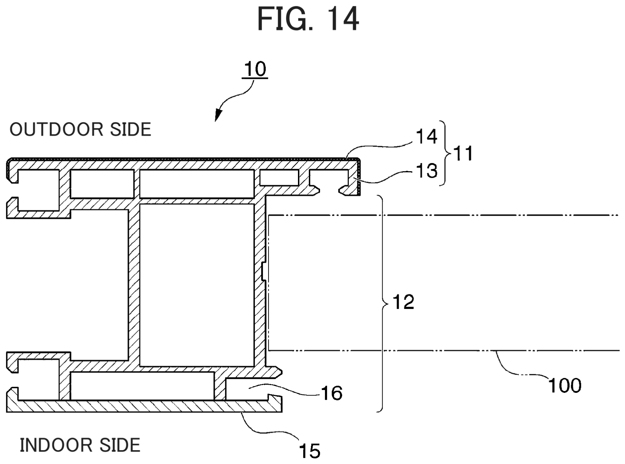

FIG. 14 is a cross-sectional view of a resin extrusion-molded product according to the embodiment of the present disclosure. FIG. 14 is a cross-sectional view of the resin extrusion-molded product in which a long stile that forms a fitting (double sliding) panel is cut in a short direction. In FIG. 14, an upper side is the outdoor side, and a lower side is the indoor side. As illustrated in FIG. 14, a resin extrusion-molded product 10 includes a surface layer portion (outdoor side portion) 11, an intermediate portion 12, and a surface layer portion (indoor side portion) 15. The surface layer portion (outdoor side portion) 11 includes a base material portion 13 formed of the first resin material and a surface layer 14 formed on a surface of the base material portion 13. A base material portion of the intermediate portion 12 is formed of the first resin material and does not have a surface layer. A base material portion of the surface layer portion (indoor side portion) 15 is formed of the second resin material formed of only the virgin resin raw material, and does not have a surface layer. The surface layer portion (outdoor side portion) 11 is a portion exposed to the outdoor side in a case where the resin extrusion-molded product 10 is a resin sash. The intermediate portion 12 is a portion continuous with the surface layer portion (outdoor side portion) 11 and not exposed on the surface, and the surface layer portion (indoor side portion) 15 is a portion exposed to the indoor side. Glass 100 is placed in a recess on a right side of the resin extrusion-molded product 10. The glass 100 is inserted between the surface layer portion (outdoor side portion) 11 and the surface layer portion (indoor side portion) 15, and is fixed by inserting a batten into a concave portion 16 at an end portion on a glass side of the surface layer portion (indoor side portion) 15. The glass 100 has an upper stile, a lower stile, and a right vertical stile on a peripheral end portion of the same configuration as the left stile, and is fixed by the stiles. The base material portions 2 of the surface layer portions 11 and 15 may be formed of only the recycled raw material of the recycled resin, and the surface layer 3 may be provided. In the intermediate portion 12, the base material portion may be formed of only the recycled raw material of the recycled resin, and the surface layer 3 may not be provided.

The surface layer portion 11 is formed of the above-described resin molded product 1.

The surface layer portion (indoor side portion) 15 is formed of only the above-described virgin resin raw material.

### (Other Examples)

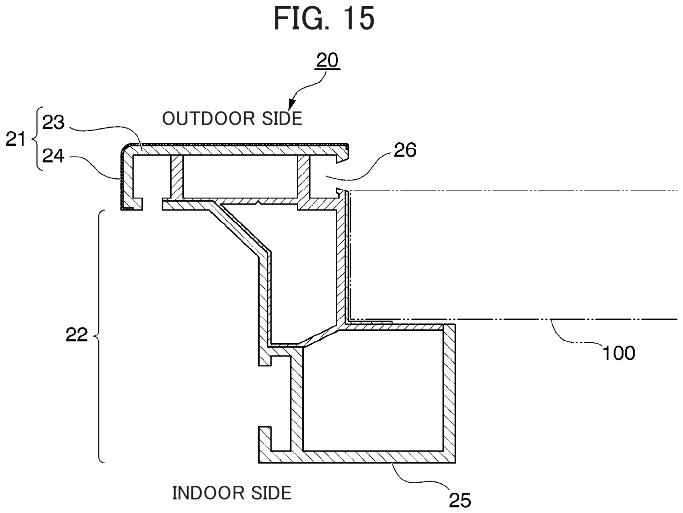

FIG. 15 is a cross-sectional view illustrating a resin extrusion-molded product according to an embodiment of the present disclosure. FIG. 15 is a cross-sectional view of the resin extrusion-molded product in which a long stile that constitutes a panel of a fitting (projected window) is cut in a short direction. In FIG. 15, an upper side is the outdoor side, and a lower side is the indoor side. As illustrated in FIG. 15, a resin extrusion-molded product 20 includes a surface layer portion (outdoor side portion) 21, an intermediate portion 22, and a surface layer portion (indoor side portion) 25. The surface layer portion (outdoor side portion) 21 includes a base material portion 23 formed of the first resin material and a surface layer 24 formed on a surface of the base material portion 23. A base material portion of the intermediate portion 22 is formed of the first resin material and does not have a surface layer. A base material portion of the surface layer portion (indoor side portion) 25 is formed of only the virgin resin raw material and does not have a surface layer. The surface layer portion (outdoor side portion) 21 is a portion exposed to the outdoor side in a case where the resin extrusion-molded product 20 is a resin sash. The intermediate portion 22 is a portion continuous with the surface layer portion (outdoor side portion) 21 and not exposed on the surface. A left vertical stile of the resin extrusion-molded product 20 is illustrated, and the glass 100 is placed in a recess on a right side. The glass 100 is inserted between the surface layer portion (outdoor side portion) 21 and the surface layer portion (indoor side portion) 125, and is fixed by inserting a batten into a concave portion 26 at an end portion on a glass side of the surface layer portion (outdoor side portion) 21. The glass 100 is fixed by an upper stile, a lower stile, and a right vertical stile on a peripheral end portion by the same configuration as the left stile.

The surface layer portion 21 is formed of the above-described resin molded product 1.

The surface layer portion (indoor side portion) 25 is formed of only the above-described virgin resin raw material, but a surface layer may be provided on a base material layer as in the surface layer portion (outdoor side portion) 21.

### (Method for Producing Resin Extrusion-molded Product)

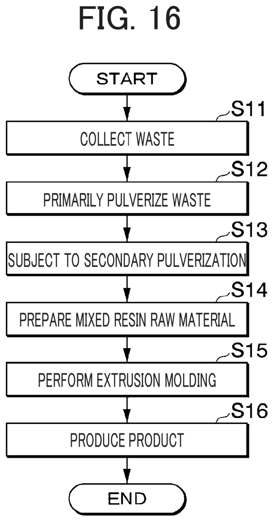

As illustrated in FIG. 16, the method for producing a resin extrusion-molded product includes: a step of obtaining a recycled raw material finer than primary powder by further subjecting the primary powder obtained by pulverizing a recycled material containing a resin to secondary pulverization (S13); a step of obtaining a mixed resin raw material by mixing a virgin resin raw material and the recycled raw material (S14); a step of extrusion-molding a first surface layer portion having a base material portion and a surface layer formed on a surface of the base material portion using the mixed resin raw material and an acrylic resin, extrusion-molding an intermediate portion formed of the mixed resin raw material and continuous with the first surface layer portion, and extrusion-molding a second surface layer portion continuous with the intermediate portion using the virgin resin raw material (S15); and a step of obtaining a resin extrusion-molded product (S16). Further, the method for producing a resin extrusion-molded product includes a step of collecting waste (S11) and a step of obtaining primary powder by primarily pulverizing the waste (S12), in order to obtain the recycled material. The first surface layer portion is a surface layer portion (outdoor side portion), and the second surface layer portion is a surface layer portion (indoor side portion).

The step of collecting the waste (S11), the step of obtaining the primary powder (S12), the step of obtaining the recycled raw material (S13), and the step of obtaining the mixed resin raw material (S14) are the same as the step of collecting the waste (S1), the step of obtaining the primary powder (S2), the step of obtaining the recycled raw material (S3), and the step of obtaining the mixed resin raw material (S4) described above.

Next, the extrusion molding is performed (S15). For the extrusion molding, a method in the related art is used. In a case where the resin extrusion-molded product 10 is produced as a resin frame of a sash, in a state in which the resin frame is installed, a portion exposed to the outside, that is, the first surface layer portion of the exposed portion which is visually recognized in appearance has a surface layer, and is molded with a composite material formed of a material containing the virgin resin raw material and the recycled raw material of the recycled material, and the second surface layer portion of the exposed portion is molded with only the virgin resin raw material, and in the state in which the resin frame is installed, a non-exposed portion which is not visually recognized in appearance is molded with a composite material formed with a material containing the virgin resin raw material and the recycled raw material of the recycled resin material. As the recycled raw material of the recycled material, a plurality of types of recycled raw materials, for example, a recycled raw material formed of a waste material of a resin fitting and a recycled raw material formed of a waste material generated in a factory may be mixed, or a recycled raw material formed of a waste material generated in a resin fitting or a factory or another waste material may be used. The base material portion 13 and the surface layer 14 of the surface layer portion 11 of the resin extrusion-molded product 10 are molded by two-color molding. In addition, the surface layer portion 11, the intermediate portion 12, and the surface layer portion 15 are molded by two-color molding.

Thereafter, a finishing process is performed to produce the resin extrusion-molded product 10 (S16). In the finishing process, the surface layer portion 11 of the resin extrusion-molded product 10 may be coated with a pigment or the like, or may be covered with a resin sheet.

In the above-described method for producing a resin extrusion-molded product, the case where the first surface layer portion having the base material portion and the surface layer formed on a surface of the base material portion is extrusion-molded using the mixed resin raw material and the acrylic resin has been described, but the method for producing a resin extrusion-molded product of the present disclosure is not limited thereto. In the method for producing a resin extrusion-molded product of the present disclosure, the base material portion may be extruded-molded using the mixed resin raw material, and then the acrylic resin may be applied to the surface of the base material portion to form the surface layer.

In a case of a molded product formed by containing a recycled material, it is necessary to remove all the foreign substances in the recycled material in order to produce a product in a state in which the foreign substance is not mixed at all. However, removing all the foreign substances from the recycled material requires a lot of labor. In contrast, in the resin molded product 1 of the present disclosure, it is possible to control reduction in quality due to the foreign substance 4 to a minimum while allowing mixing of the foreign substance 4. As an example of the reduction in quality due to the foreign substance 4, reduction in appearance designability is exemplified. For example, a resin frame of a sash or the like is a component that is easily seen by a person in appearance and is used for a long period of time. Therefore, a large number of irregularities due to the foreign substance 4 are exposed on the surface 2a of the base material portion 2 of the resin molded product 1, or a large foreign substance is exposed, and thus the designability is reduced. In contrast, in the resin molded product 1 of the present disclosure, the number of irregularities due to the foreign substance 4 exposed on the surface 2a of the base material portion 2 can be controlled, and an influence on the appearance designability can be avoided. As a result of controlling the number of foreign substance 4 exposed on the surface 2a of the base material portion 2, an occurrence rate of defective products of the resin molded product 1 is reduced. In the resin molded product 1 of the present disclosure, since the particle diameter of the foreign substance 4 exposed on the surface 2a of the base material portion 2 and in the vicinity thereof can be controlled to a small size of 355 µm or less, the foreign substance 4 can be made inconspicuous in appearance. In addition, the reduction in physical properties is considered as an example of the reduction in quality due to the foreign substance 4. In the resin molded product 1 of the present disclosure, the size of the foreign substance 4 can be reduced by the secondary pulverization. As a result, the reduction in physical properties of the resin molded product 1 due to the foreign substance 4 can be avoided. Since the exposed foreign substance 4 can be made inconspicuous in appearance, the reduction in quality of the resin molded product 1 can be avoided.

In the resin molded product 1 of the present disclosure, since the particle diameter of the foreign substance 4 exposed on the surface 2a of the base material portion 2 and in the vicinity thereof can be controlled to a small size of 250 µm or less, the foreign substance 4 can be made less conspicuous in appearance even when the thickness of the surface layer 3 is small.

In the resin molded product 1 of the present disclosure, since the thickness of the surface layer is 0.2 mm or more and 0.5 mm or less, the foreign substance 4 is not recognized on the surface 2a of the base material portion 2. In addition, the tensile elongation rate of the resin molded product 1 is 50% or more, and the resin molded product 1 has sufficient strength (difficulty in breaking) as a fitting.

The resin molded product 1 of the above embodiment is formed of the virgin resin raw material and the recycled material. In the resin molded product 1, the number of the foreign substance 4 present per 5 cm2 on the surface 2a of the base material portion 2 and in the vicinity thereof is 6 or less on average, and the number of the exposed foreign substance 4 is extremely small. The resin molded product 1 can withstand practical use as a product without reducing the quality in appearance even when the foreign substance 4 is mixed.

The matrix resin of the resin molded product 1 is a resin containing polyvinyl chloride. The resin molded product 1 can be used for producing, for example, a resin frame of a sash. As a result of adopting the resin molded product 1 to produce the resin frame of a sash or the like, in the production of a fitting, a usage rate of the recycled material from waste can be improved, and an effect of carbon neutralization can be exhibited.

In the resin molded product 1 according to the above embodiment, the foreign substance 4 may be a material other than an inorganic substance such as an organic material, which has a melting point higher than a melting point of the matrix resin or a thermosetting resin, or may contain a metal material. In the resin molded product 1, since the resin molded product 1 is obtained by extrusion molding using a thermoplastic resin as a main raw material, when the thermosetting resin is contained in the material, the thermosetting resin is likely to remain in the resin molded product 1 and become a foreign substance. Similarly, when a material having a melting point higher than a melting point of the matrix resin is contained, the resin molded product 1 is likely to become a foreign substance without being melted. However, since the resin molded product 1 uses the recycled raw material processed into fine particles, an increase in size of the foreign substance 4 due to the recycled raw material is prevented. As a result, even when an organic material having a melting point higher than a melting point of the matrix resin or a thermosetting resin, which is a material easily exposed as the foreign substance 4, is mixed, an influence on the quality of the resin molded product 1 is small.

According to the resin molded product 1 of the above embodiment, since the minimum diameter of the foreign substance is 355 µm or less, even when the foreign substance 4 is exposed on the surface of the resin molded product 1, the foreign substance 4 is inconspicuous in appearance, and designability of being capable of withstanding practical use can be maintained.

A tensile elongation rate at break of the resin molded product 1 is 25% or more. Therefore, even when the resin molded product 1 is a resin molded product 1 in which a recycled material is used and the foreign substance 4 is mixed, physical properties of being able to withstand practical use can be obtained.

According to the resin molded product 1 of the above embodiment, since the base material portion 2 contains the additive, the tensile elongation rate of the resin molded product 1 is improved, and the resin molded product 1 has sufficient strength (difficulty in breaking) as a fitting. In addition, since a content of the additive with respect to the total weight (100 wt%) of the base material portion 2 is 0.05 wt% or more and 3 wt% or less, an effect of tensile elongation at break is obtained.

According to the above method for producing a resin molded product, since the recycled material is subjected to the secondary pulverization to obtain the fine recycled raw material, even when the foreign substance 4 is mixed, the foreign substance 4 is hardly exposed in appearance of the resin molded product, and a high-quality resin molded product can be provided.

According to the above method for producing a resin molded product, since the recycled raw material having a minimum particle diameter of 355 µm or less is obtained, it is possible to reduce the exposure of the foreign substance 4 on the surface 2a of the base material portion 2 and in the vicinity thereof. According to the above method for producing a resin molded product, since the recycled raw material having a minimum particle diameter of 355 µm or less is obtained, the size of the foreign substance 4 exposed on the surface 2a of the base material portion 2 and in the vicinity thereof can be controlled to a minute size, and the foreign substance 4 is hardly conspicuous in appearance.

According to the above method for producing a resin molded product, the secondary pulverization is performed such that an average particle diameter of the recycled raw material is less than the average particle diameter of the main raw material of the virgin resin raw material. As a result, in the producing process, a resin component derived from the recycled material is easily melted and is favorably mixed with the virgin resin raw material, and the exposure of the foreign substance 4 on the surface 2a of the base material portion 2 of the resin molded product 1 and in the vicinity thereof can be reduced.

According to the above method for producing a resin molded product, the virgin resin raw material contains polyvinyl chloride. The resin molded product 1 can be used for producing, for example, a resin frame of a sash. As a result of adopting the resin molded product 1 to produce the resin frame of a sash or the like, in the production of a fitting, a usage rate of the recycled raw material from waste can be improved, and an effect of carbon neutralization can be exhibited.

Since the above recycled raw material does not contain large particles, a large foreign substance 4 is less likely to be exposed when an extrusion-molded product is produced, and thus the recycled raw material is suitable as a material for the molded product.

According to the above method for producing a resin molded product, waste of a resin fitting is used as a recycled material. The method for producing a resin molded product can be used for producing, for example, a resin frame of a sash. In the production of the resin frame of a sash or the like, the resin molded product 1 can improve the usage rate of the recycled raw material from the waste. As a result, since reuse of the resin material can be promoted, and the use of the virgin resin raw material can be prevented, the above method for producing a resin molded product can exhibit the effect of carbon neutralization related to the production of the resin frame of a sash.

According to the above embodiment, it is possible to provide a resin molded product and a method for producing a resin molded product, which can achieve high quality while containing a recycled resin.

The resin extrusion-molded product 10 of the present disclosure includes the surface layer portions 11 and 15 and the intermediate portion 12, and the surface layer portion 11 is formed of the resin molded product 1 of the present disclosure, so that even when the foreign substance 4 is exposed on the surface of the base material portion 13 of the surface layer portion 11 and in the vicinity thereof, the foreign substance 4 is inconspicuous in appearance, and the designability of being capable of withstanding practical use can be maintained.

According to the above method for producing a resin extrusion-molded product, since the recycled material is subjected to the secondary pulverization to obtain the fine recycled raw material, even when the foreign substance 4 is mixed, the foreign substance 4 is hardly exposed in appearance of the resin molded product, and a high-quality resin extrusion-molded product can be provided.

According to the above method for producing a resin extrusion-molded product, since the recycled raw material having a minimum particle diameter of 355 µm or less is obtained, it is possible to reduce the exposure of the foreign substance on the surface of the base material portion 13 of the surface layer portion 11 and in the vicinity thereof. According to the above method for producing a resin extrusion-molded product, since the recycled raw material having a minimum particle diameter of 355 µm or less is obtained, the size of the foreign substance exposed on the surface of the base material portion 13 and in the vicinity thereof can be controlled to a minute size, and the foreign substance is hardly conspicuous in appearance.

According to the above method for producing a resin extrusion-molded product, the secondary pulverization is performed such that the average particle diameter of the recycled raw material is 355 µm or less. As a result, in the producing process, since a surface area of the resin component derived from the recycled material is large, the resin component is easily melted and is favorably mixed with the virgin resin raw material, and the exposure of the foreign substance on the surface of the base material portion 13 of the surface layer portion 11 of the resin extrusion-molded product 10 and in the vicinity thereof can be reduced.

According to the above method for producing a resin extrusion-molded product, the virgin resin raw material contains polyvinyl chloride. The resin extrusion-molded product 10 can be used for producing, for example, a resin frame of a sash. As a result of adopting the resin extrusion-molded product 10 for the resin frame of a sash or the like, in the production of a fitting, the usage rate of the recycled raw material from waste can be improved, and the effect of carbon neutralization can be exhibited.

Since the above recycled raw material does not contain large particles, a large foreign substance is less likely to be exposed when an extrusion-molded product is produced, and thus the recycled raw material is suitable as a material for the molded product.

According to the above method for producing a resin extrusion-molded product, waste of a resin fitting is used as a recycled material. The method for producing a resin extrusion-molded product can be used for producing, for example, a resin frame of a sash. In the production of the resin frame of a sash or the like, the resin extrusion-molded product 10 can improve the usage rate of the recycled material from the waste. As a result, since reuse of the resin material can be promoted, and the use of the virgin resin raw material can be prevented, the above method for producing a resin extrusion-molded product can exhibit the effect of carbon neutralization related to the production of the resin frame of a sash.

According to the above embodiment, it is possible to provide a resin extrusion-molded product and a method for producing a resin extrusion-molded product, which can achieve high quality while containing a recycled resin.

The above embodiments are examples, and are not limited to the scope of the above disclosure. The above-described embodiments can be implemented in various other forms, and various omissions, replacements, and modifications can be made without departing from the gist of the disclosure. These embodiments and modifications thereof are included in the scope of claims and their equivalents. For example, although the primary pulverization and the secondary pulverization are performed, the minimum particle diameter of 355 µm or less may be obtained by one pulverization, or sieving may not be performed after the secondary pulverization.

In the above embodiments, an example in which polyvinyl chloride is used as a main material as the matrix resin is described, but the matrix resin is not limited to this example. For example, the matrix resin may be ABS, high-density polyethylene, low-density polyethylene, polypropylene, polystyrene, nylon, or the like.

### EXAMPLES

Although the present invention will be more specifically described below using Examples, the present invention is not limited to Examples below.

### (Example 1)

An example in which a resin molded product is obtained by the above-described method for producing a resin molded product will be described. Examples of the molding material include a PVC resin, an acrylic rubber, titanium oxide, calcium, a zinc-based metal soap, high molecular weight modified acrylic, calcium carbonate, polyol ester, polyethylene wax, and a color pigment. A resin material containing the PVC resin is a virgin resin raw material. A raw material of the PVC resin is in a powder form. For other materials, virgin materials were also used.

A recycled resin material was obtained from waste of a resin frame of a sash. As the waste resin frame, a resin frame containing the PVC resin as a main material was used. The waste resin frame is taken out, and the resin frame is pulverized to obtain a mixed and pulverized product. Components such as a metal and a soft resin remaining in the mixed and pulverized product were removed to obtain primary powder. Next, the primary powder was subjected to secondary pulverization by a pulverizer. After the secondary pulverization, particles having a minimum diameter of more than 250 µm were sieved to obtain a recycled raw material having a minimum diameter of 250 µm or less. As illustrated in FIG. 12, a direction having a diameter that is most likely to allow particles to pass through when it is assumed that the particles pass through the sieve is referred to as a minimum direction X. Regarding a maximum particle diameter, a largest size among diameters along a direction intersecting the minimum direction X is referred to as a minimum diameter y. A maximum length D indicates a maximum length in a direction D through which the particles are most difficult to pass. A length L of a longest portion and the maximum length D may not coincide with each other.

The obtained recycled raw material was mixed with a PVC resin pellet of a virgin resin raw material and other materials to obtain a molding material. A content of the recycled resin material contained in the molding material was 10 wt%. In addition, an acrylic resin (trade name: AM10, manufactured by Techno-UMG Co., Ltd.) was used as a material of a surface layer (material for forming surface layer). Extrusion-molding was performed using the molding material and the material for molding the surface layer to obtain a resin molded product having a base material portion containing a recycled resin material and a surface layer formed on a surface of the base material portion and formed of an acrylic resin. A thickness of the surface layer was 0.35 mm to 0.40 mm.

### (Example 2)

A recycled raw material was obtained in the same manner as in Example 1. In Example 2, a recycled raw material having a minimum diameter y of more than 250 µm and 300 µm or less was obtained. The obtained recycled raw material was mixed under the same conditions as in Example 1 to obtain a molding material. Extrusion-molding was performed using the obtained molding material and the material for molding the surface layer under the same conditions as in Example 1 to obtain a resin molded product having a base material portion containing a recycled resin material and a surface layer formed on a surface of the base material portion and formed of an acrylic resin.

### (Example 3)

A recycled raw material was obtained in the same manner as in Example 1. In Example 3, a recycled raw material having a minimum diameter y of more than 300 µm and 355 µm or less was obtained. The obtained recycled raw material was mixed under the same conditions as in Example 1 to obtain a molding material. Extrusion-molding was performed using the obtained molding material and the material for molding the surface layer under the same conditions as in Example 1 to obtain a resin molded product having a base material portion containing a recycled resin material and a surface layer formed on a surface of the base material portion and formed of an acrylic resin.

### (Comparative Example 1)

A recycled raw material was obtained in the same manner as in Example 1. In Comparative Example 1, a recycled raw material having a minimum diameter y of more than 355 µm and 425 µm or less was obtained. The obtained recycled raw material was mixed under the same conditions as in Example 1 to obtain a molding material. Extrusion-molding was performed using the obtained molding material and the material for molding the surface layer under the same conditions as in Example 1 to obtain a resin molded product having a base material portion containing a recycled resin material and a surface layer formed on a surface of the base material portion and formed of an acrylic resin.

### (Comparative Example 2)

A recycled raw material was obtained in the same manner as in Example 1. In Comparative Example 2, a recycled raw material having a minimum diameter y of more than 425 µm and 500 µm or less was obtained. The obtained recycled raw material was mixed under the same conditions as in Example 1 to obtain a molding material. Extrusion-molding was performed using the obtained molding material and the material for molding the surface layer under the same conditions as in Example 1 to obtain a resin molded product having a base material portion containing a recycled resin material and a surface layer formed on a surface of the base material portion and formed of an acrylic resin.

### (Example 4)

A resin molded product having a base material portion containing a recycled resin material and a surface layer formed on a surface of the base material portion and formed of an acrylic resin was obtained in the same manner as in Example 1 except that the thickness of the surface layer was 0.25 mm to 0.30 mm.

### (Example 5)

A resin molded product having a base material portion containing a recycled resin material and a surface layer formed on a surface of the base material portion and formed of an acrylic resin was obtained in the same manner as in Example 2 except that the thickness of the surface layer was 0.25 mm to 0.30 mm.

### (Example 6)

A resin molded product having a base material portion containing a recycled resin material and a surface layer formed on a surface of the base material portion and formed of an acrylic resin was obtained in the same manner as in Example 3 except that the thickness of the surface layer was 0.25 mm to 0.30 mm.

The number of foreign substances exposed on the surface of the base material portion per unit area of each resin molded product of Examples 1 to 6 and Comparative Examples 1 and 2 was measured. A case where an influence of the foreign substance on the appearance was small was evaluated as "best", a case where the influence of the foreign substance on the appearance was not large when the foreign substance was alone but the influence of the foreign substance on the appearance was large when a plurality of foreign substances were collected was evaluated as "good", and a case where the influence of the foreign substance on the appearance was large was evaluated as "defective". The number of foreign substances exposed on the surface of the base material portion per unit area was measured visually and by a microscope (manufactured by Microsquare, Inc.). Specifically, the number of foreign substances that could be visually confirmed was measured at 10 areas obtained by dividing a measurement range into 6 cm × 6 cm, and an average value was calculated. For the confirmed foreign substance, a length of a longest portion was measured using a microscope. A numerical value of the foreign substance having a longest portion of a longest length among the measured plurality of foreign substances is shown in a table as a representative value.

**[Table 1]**

| Thickness of surface layer(mm) | | 0.35~0.40 | | | | | 0.25~0.30 | | |
|---|---|---|---|---|---|---|---|---|---|
| Minimum particle diameter of recycled raw material(µm) | | 250 or less | 250~300 | 300~355 | 355~425 | 425~500 | 250 or less | 250~300 | 300~355 |
| Content of recycled raw material (wt%) | | 10 | 10 | 10 | 10 | 10 | 10 | 10 | 10 |
| Number of foreign substances (piece) | Total number of visually recognizable foreign substances | 0 | 4 | 11 | 11 | 14 | 16 | 31 | 36 |
| | Number of visually recognizable foreign substances (piece/cm) | 0.00 | 0.10 | 0.29 | 0.31 | 0.39 | 0.43 | 0.85 | 0.99 |
| Number of foreign substances per unit area (piece) | Number of "best" | 0 | 2 | 8 | 6 | 6 | 13 | 20 | 10 |
| | Number of "good" | 0 | 2 | 3 | 4 | 4 | 3 | 11 | 10 |
| | Number of "defective" | 0 | 0 | 0 | 1 | 4 | 0 | 0 | 16 |
| Longest length of foreign substance(µm) | | - | 940 | 1275 | 1560 | 1826 | 1263 | 1572 | 1958 |

In each of the resin molded products of Examples 1 to 3, the number of foreign substances per unit area exposed on the surface of the base material portion was controlled to be low. The appearance designability was visually evaluated. As a result, the resin molded products of Examples 1 to 3 were good enough to withstand practical use with no conspicuous presence of the foreign substance. On the other hand, in the resin molded products of Comparative Examples 1 and 2, the number of foreign substances and large foreign substances were conspicuous, and in the evaluation of the appearance designability by visual observation, the resin molded products were evaluated as defective products. As described above, it was found that regarding the resin molded products of Examples 1 to 3, resin molded products that can withstand practical use although a content of the recycled resin material is large can be obtained. In particular, in Example 1, the number of foreign substances per unit area exposed on the surface of the base material portion and a value of the maximum length of the foreign substance could be controlled to be small. In addition, in each of the resin molded products of Examples 4 to 6, the number of foreign substances per unit area exposed on the surface of the base material portion was controlled to be low. The appearance designability was visually evaluated. As a result, the resin molded products of Examples 4 to 6 were good enough to withstand practical use with no conspicuous presence of the foreign substance. In particular, in Example 4, when the thickness of the surface layer was small, the number of foreign substances per unit area exposed on the surface of the base material portion was controlled to be low.

A sixth aspect of the present disclosure includes the following.
(1) A resin molded product containing a recycled resin material, in which a matrix resin contains a foreign substance derived from the recycled resin material and formed of a component different from the matrix resin, and a lead content VPB of the resin molded product satisfies 0 wt% < VPB ≤ 3 wt%.
(2) A recycled resin product, including: a first resin molded portion formed of a first resin material containing a recycled raw material of a recycled resin; and a second resin molded portion formed of a second resin material having a content ratio of the recycled resin material containing the recycled raw material lower than that of the first resin molded portion or containing no recycled resin material, in which an exposed portion exposed in appearance during use is formed of the second resin molded portion, and a non-exposed portion located inside the exposed portion and not exposed in appearance during use is formed of the first resin molded portion.
(3) The recycled resin product as described in aspect (2), in which the second resin material is a virgin resin material not containing the recycled resin material.

Although embodiments of the present disclosure have been described above, the present disclosure is not limited to the above embodiments, and the above embodiments may be appropriately modified within the scope of the gist of the present disclosure.

### EXPLANATION OF REFERENCE NUMERALS

(FIG. 1)
   100: extrusion molding machine, 110: extruder, 111: hopper, 120: die, 130: cooler, E: extrusion-molded product
(FIGS. 2 to 5)
   1: double sliding window (sash), 5: metal vertical frame (metal member), 8: resin vertical frame (vinyl chloride-based resin member), 50: first engaging portion, 50A: insertion portion, 54a: insert receiving portion, 54b: locking portion, 80: second engaging portion, 80A: locking portion, 84: attaching portion, 84a: inserting portion, 84b: locked portion
(FIGS. 6 to 9)
   1: management system, 2: communication network, 3: client terminal, 4: construction operator terminal, 5: collector terminal, 50: management device, 51: communication device, 52: display device, 53: input device, 60: processing device, 61: resin sash information acquisition unit, 62: renovation proposal unit, 63: renovation management unit, 64: operator selection unit, 65: provision information generation unit, 66: information provision unit, 67: production management unit, 70: storage device, 71: product information holding unit, 72: operator information holding unit, 73: stock information holding unit, 151: communication device, 152: display device, 153: input device, 160: processing device, 161: provision information acquisition unit, 162: provision information presentation unit, 163: step management unit, 164: stock management unit, 165: shipment management unit, 170: storage device, 171: step information holding unit, 172: stock information holding unit, 173: shipment information holding unit
(FIGS. 10 to 16)
   1: resin molded product, 2: base material portion, 3: surface layer, 4: foreign substance, 10: resin extrusion-molded product, 11: surface layer portion, 12: intermediate portion, 13: base material portion, 14: surface layer, 15: surface layer portion, 20: resin extrusion-molded product, 21: surface layer portion, 22: intermediate portion, 23: base material portion, 24: surface layer, 25: surface layer portion, 100: glass

## Claims

1. A composition for a sash, comprising: a recycled vinyl chloride-based resin; and an additive,
the additive being one or more selected from the group consisting of maleic anhydride, a polytetrafluoroethylene, and a silane coupling agent.

2. The composition for a sash according to claim 1, wherein a content of the additive is 0.01 mass% or more and 10 mass% or less.

3. A sash produced by extrusion-molding the composition for a sash according to claim 1 or 2.

4. A method for producing a sash, comprising: a step of extrusion-molding the composition for a sash according to claim 1 or 2.

5. A sash in which a vinyl chloride-based resin member is attached to a metal member, the sash comprising:
a first engaging portion provided on the metal member; and
a second engaging portion provided on the vinyl chloride-based resin member and engaged with the first engaging portion,
the first engaging portion and the second engaging portion being fixed by being engaged with each other.

6. The sash according to claim 5, wherein the metal member is formed of a metal frame, and the vinyl chloride-based resin member is formed of a vinyl chloride-based resin frame, and/or
the metal member is formed of a metal stile, and the vinyl chloride-based resin member is formed of a vinyl chloride-based resin stile.

7. The sash according to claim 5 or 6, wherein the second engaging portion comprises a claw-shaped attaching portion comprising an insertion portion at a tip portion thereof and a locked portion, and
the first engaging portion comprises an insert receiving portion into which the tip portion is inserted and a locking portion to which the locked portion is locked.

8. The sash according to claim 5 or 6, wherein at least one of the first engaging portion or the second engaging portion comprises an insertion portion having a circular tip, and the other comprises a C-shaped locking portion capable of fixing the insertion portion.

9. A composition for a sash, comprising: a recycled vinyl chloride-based resin; and an unused crosslinked vinyl chloride-based resin.

10. The composition for a sash according to claim 9, wherein a content of the unused crosslinked vinyl chloride-based resin is 3 mass% or more and 50 mass% or less.

11. A sash produced by extrusion-molding the composition for the sash according to claim 9 or 10.

12. A method for producing a sash, comprising: a step of extrusion-molding the composition for a sash according to claim 9 or 10.

13. A method for producing a sash, comprising: a step of extrusion-molding a composition for a sash comprising a recycled vinyl chloride-based resin and a stabilizer,
the stabilizer being one or more selected from the group consisting of a calcium-zinc-based stabilizer, a barium-zinc-based stabilizer, and a tin-based stabilizer,
a mass ratio of the stabilizer with respect to the recycled vinyl chloride-based resin in the composition for a sash being 1% or more and 5% or less.

14. The method for producing a sash according to claim 13, further comprising: a step of obtaining the recycled vinyl chloride-based resin from a used sash.

15. The method for producing a sash according to claim 14, wherein the used sash comprises a vinyl chloride-based resin and a lead-based stabilizer, and
the step of obtaining the recycled vinyl chloride-based resin comprises a step of crushing the used sash to obtain powder, and a step of removing the lead-based stabilizer from the powder to obtain the recycled vinyl chloride-based resin.

16. The method for producing a sash according to claim 15, wherein a content of the lead-based stabilizer in the recycled vinyl chloride-based resin is 5 mass% or less.

17. A management system comprising: a management device that manages a waste material scheduled to be generated in a renovation work; and
a terminal device that is to be used by a collector who collects the waste material,
the management device comprising
a waste material information acquisition unit that acquires information on the waste material scheduled to be generated in the renovation work,
a provision information generation unit that generates provision information to be provided to the collector who collects the waste material based on the information acquired by the waste material information acquisition unit, and
an information provision unit that provides the provision information generated by the provision information generation unit to the collector,
the terminal device comprising
a provision information acquisition unit that acquires the provision information from the management device, and
a provision information presentation unit that presents the provision information acquired by the provision information acquisition unit.

18. A management device comprising: a waste material information acquisition unit that acquires information on a waste material scheduled to be generated in a renovation work;
a provision information generation unit that generates provision information to be provided to a collector who collects the waste material based on the information acquired by the waste material information acquisition unit; and
an information provision unit that provides the provision information generated by the provision information generation unit to the collector.

19. The management device according to claim 18, wherein the information provision unit provides the provision information to the collector before the renovation work is performed.

20. The management device according to claim 18 or 19, wherein the provision information comprises at least one of the following: a schedule of the renovation work; a type, a manufacturer, a color, a size, a product number, a number, or a state of the waste material collected in the renovation work; years from installation of the waste material; a region of an installation place of the waste material; an environment including temperature, humidity, or sunlight; a type, a color, or an amount of a resin comprised in the waste material; a type or an amount of a material other than the resin comprised in the waste material; or a type, a color, or an amount of a material comprised in a component attached to the waste material.

21. The management device according to claim 18 or 19, wherein the collector is an operator who collects and classifies the waste material, and
the provision information comprises information related to the classification of the waste material.

22. The management device according to claim 18 or 19, wherein the collector is an operator who collects the waste material and who recycles a resource comprised in the waste material, and
the provision information comprises information related to the recycle of the resource.

23. The management device according to claim 18 or 19, further comprising: an operator information holding unit that holds information related to a plurality of collectors; and
an operator selection unit that selects a collector who collects the waste material with reference to the information held in the operator information holding unit.

24. The management device according to claim 23, wherein the operator selection unit selects the collector based on the information acquired by the waste material information acquisition unit.

25. A management method, comprising causing a computer to execute:
a step of acquiring information on a waste material scheduled to be generated in a renovation work;
a step of generating provision information to be provided to a collector who collects the waste material based on the acquired information; and
a step of providing the generated provision information to the collector before the renovation work is performed.

26. A computer program for causing a computer to function as:
a waste material information acquisition unit that acquires information on a waste material scheduled to be generated in a renovation work;
a provision information generation unit that generates provision information to be provided to a collector who collects the waste material based on the information acquired by the waste material information acquisition unit; and
an information provision unit that provides the provision information generated by the provision information generation unit to the collector.

27. A terminal device comprising: a provision information acquisition unit that acquires, from a management device that manages a waste material scheduled to be generated in a renovation work, provision information generated based on information on the waste material by the management device.

28. A management method, comprising: causing a computer to execute
a step of acquiring, from a management device that manages a waste material scheduled to be generated in a renovation work, provision information generated based on information on the waste material by the management device.

29. A computer program for causing a computer to function as:
a provision information acquisition unit that acquires, from a management device that manages a waste material scheduled to be generated in a renovation work, provision information generated based on information on the waste material by the management device.

30. A resin molded product comprising a recycled material comprising a resin, the resin molded product comprising:
a base material portion; and a surface layer formed on a surface of the base material portion,
the base material portion comprising a matrix resin and a foreign substance comprised in the matrix resin and formed of a component derived from the recycled material,
the component being a resin different from the matrix resin or a metal,
a particle diameter of the foreign substance being 355 µm or less,
a thickness of the surface layer being 0.2 mm or more and 0.5 mm or less.

31. The resin molded product according to claim 30, wherein the particle diameter of the foreign substance is 250 µm or less.

32. The resin molded product according to claim 30, wherein the surface layer comprises an acrylic resin.

33. The resin molded product according to claim 30, wherein the matrix resin is a resin comprising polyvinyl chloride.

34. The resin molded product according to claim 30, wherein the foreign substance is formed of an organic material having a melting point higher than a melting point of the matrix resin or a thermosetting resin, or a metal.

35. The resin molded product according to claim 30, wherein the base material portion comprises an additive, and
a content of the additive with respect to a total weight of the base material portion is 0.05 wt% or more and 0.15 wt% or less.

36. A resin extrusion-molded product comprising: a surface layer portion; and a lower layer portion continuous with the surface layer portion,
the surface layer portion being formed of the resin molded product according to any one of claims 30 to 35.

37. A method for producing a resin molded product, comprising: a step of further subjecting primary powder obtained by pulverizing waste of a resin fitting to secondary pulverization to obtain a recycled raw material finer than the primary powder;
a step of mixing a virgin resin raw material and the recycled raw material to obtain a mixed resin raw material;
a step of performing extrusion molding using the mixed resin raw material and an acrylic resin; and
a step of obtaining a resin molded product,
the waste comprising a foreign substance formed of an organic material or a thermosetting resin having a melting point higher than a melting point of polyvinyl chloride as a main material of the waste of the resin fitting, or a metal,
in the step of obtaining the recycled raw material, the waste being pulverized to prepare the recycled raw material having a minimum particle diameter of less than 600 um.

38. A method for producing a resin extrusion-molded product, comprising: a step of further subjecting primary powder obtained by pulverizing waste of a resin fitting to secondary pulverization to obtain a recycled raw material finer than the primary powder;
a step of mixing a virgin resin raw material and the recycled raw material to obtain a mixed resin raw material;
a step of extrusion-molding a first surface layer portion having a base material portion and a surface layer formed on a surface of the base material portion using the mixed resin raw material and an acrylic resin, extrusion-molding an intermediate portion formed of the mixed resin raw material and continuous with the first surface layer portion, and extrusion-molding a second surface layer portion continuous with the intermediate portion using the virgin resin raw material; and
a step of obtaining a resin extrusion-molded product,
the waste comprising a foreign substance formed of an organic material or a thermosetting resin having a melting point higher than a melting point of polyvinyl chloride as a main material of the waste of the resin fitting, or a metal,
in the step of obtaining the recycled raw material, the waste being pulverized to prepare the recycled raw material having a minimum particle diameter of less than 600 um.
